# EUROPEAN PATENT SPECIFICATION

(11) **EP 0 743 011 B1**
(45) Date of publication and mention of the grant of the patent: **31.03.2004**
(21) Application number: 95906544.2
(22) Date of filing: 30.01.1995
(51) Int. Cl.: A23B 4/023, A23B 4/027, A23L 1/31

(54) **PROCESSED MEAT, MEAT MATERIAL USING THE SAME, AND METHOD OF PROCESSING MEAT**
BEHANDELTES FLEISCHPRODUKT, DARAUS HERGESTELLTE FLEISCHERZEUGNISSE UND VERFAHREN ZUR BEHANDLUNG VON FLEISCH
VIANDE PREPAREE, SUBSTANCE CARNEE UTILISANT CETTE PREPARATION, ET PROCEDE DE PREPARATION DE LA VIANDE

(30) Priority: 31.01.1994 JP 2902394
(43) Date of publication of application: 20.11.1996
(73) Proprietor: Kabushiki Kaisha Katayama, Onga-gum, Fukuoka-ken 807 (JP)
(72) Inventor: KATAYAMA, Hiroshi 4-12, Takasuhigashi 4-chome, Fukuoka-ken 808-01 (JP); KATAYAMA, Taro 4-12, Takasuhigasi 4-chome, Kitakyusyu-shi Fukuoka-ken 808-01 (JP)
(74) Representative: Bagger-Soerensen, Birgitte
(86) International application number: PCT/JP1995/000118
(87) International publication number: WO 1995/020323

(56) References cited:
- EP-A- 0 259 285
- JP-A- 53 145 948
- JP-B- 5 028 587
- JP-B- 62 049 012
- US-A- 4 937 092
- US-A- 5 137 746
- PATENT ABSTRACTS OF JAPAN vol. 13, no. 466 (C-646), 20 October 1989 & JP 01 181767 A (SUGISAWA AKIRA ET AL.), 19 July 1989
- PATENT ABSTRACTS OF JAPAN vol. 14, no. 197 (C-712), 23 April 1990 & JP 02 039845 A (MATSUDA SHINOBU), 8 February 1990
- PATENT ABSTRACTS OF JAPAN vol. 5, no. 62 (C-52), 25 April 1981 & JP 56 015671 A (TOKUDA KURANARI), 14 December 1981
- DATABASE WPI Week 7806 Derwent Publications Ltd., London, GB; AN 78-11064a XP002075010 & JP 52 154 555 A (TOYO INK MFG CO) , 22 December 1977
- DATABASE FSTA INTERNATIONAL FOOD INFORMATION SERVICE (IFIS), FRANFURT/MAIN, DE MADHAVAN P ET AL: "Canning of tuna in oil." XP002055513 & FISHERY TECHNOLOGY, vol. 8, no. 1, 1971, pages 23-26, Central Inst. of Fisheries Tech., Ernakulam, Cochin-11, India
- DATABASE FSTA INTERNATIONAL FOOD INFORMATION SERVICE (IFIS), FRANFURT/MAIN, DE ARRIETA LIZANA E X: "Use of polyphosphates in refrigerated and frozen hake fillets (Merluccius gayi gayi)." XP002055514 & ANALES DE LA FACULTAD DE CIENCIAS QUIMICAS Y FARMACOLOGICAS, UNIVERSIDAD DE CHILE, vol. 31/32, 1981,
- PATENT ABSTRACTS OF JAPAN vol. 5, no. 54 (C-50), 15 April 1981 & JP 56 008640 A (TAKEDA CHEM.), 29 January 1981

## Description

### FIELD OF THE INVENTION

This invention relates to processed meat, meat food material using the same, a production method for processed meat, and more specifically to processed meat, meat food material, and a production method for processed meat that involve the brining of meat of cellular membranes on skeletal parts, myofibril, perimysium, collagen, fatty materials, fat and cellular membrane structures in fat, and promote emulsification and addition of a gelling function, improve moisture retention and cohesiveness, prevent drip outflow during freezing and thawing, tenderizes meat fibers and fat, prevent deterioration in meat quality caused by oxidation or gellatinization, and restore and revive the flavor and color of meat of previously deteriorated quality.

### BACKGROUND OF THE INVENTION

In recent years, livestock meat such as cattle, horse, pig, sheep and poultry as well as non-domesticated animals such as boar and deer have come to be commonly consumed. Portions of these animals are dressed for sale. The meat quality of each of these portions generally determines how it will be used as food. For instance, the tenderloin and roast portions from cattle are used as steak, and a round of beef are used in stew and curry; in poultry, the upper thigh meat is served while still on the bone, and breast meat is deep fried. Pork yields roast ham and ground mincemeat, processed food in different ways such as canned food, sausage or smoked meat according to the hardness or softness of the meat. This meat has up until now been processed by traditional methods, refrigeration or freezing while raw with respective adverse effects on the meat color and quality and then used for sale or various processing according to the resultant quality of the meat.

A variety of methods have been proposed for conventional processing of meat. These are disclosed in:
1. The production method for cornbeef in JP-B-54080456 in which clumps of meat stock are treated with cuts, and additives such as phosphate extenders and table salt are added and the mixture then soaked and agitated at low pressure of 60 cmHg for a 15 to 25% improvement of yield in production.
2. The production method for blocks of chicken meat in JP-B-59039111 in which 1 to 3% table salt is added to clumps of chicken meat and both are gently mixed and agitated, to cause a salt-soluble protein to come out as meat paste on the surface of the meat clump, and this all filled into a mold at reduced pressure and heated further to solidify.
3. The production method for processed meat pickle and processed meat in JP-B-62029953 in which steamed and heated pickle fluid in injected into the food stock to form a low salt, low-phosphoric acid and low calorie processed meat.
4. The production method for seasoned meat in JP-B-3180138 in which applicable amounts of items such as saccharide, coagulant, coloring agents, emulsion stabilizer and pH adjusters and the main ingredient pulverized salt are added and the meat then soaked for 10 to 30 hours in large amounts of pickle solution formed in concentrations near those of body fluids.
5. The production method for processed meat in JP-B-58037826 in which sodium salt is added to meat clumps, the ion intensity on the meat clump surface is adjusted to 0.6 or more, a solution of actomyosin is made to appear on the meat clump surface, and after refrigerating at - 2 to -8°C, the clumps of meat are formed at a pressure of 3 to 70 kg/cm² and joined as a slab of meat.
6. The production method for reforming small mixed, kneaded meat clumps in JP-B-2308774 in which a myofibril protein dissolving agent such as table salt is added to small clumps of meat paste of 10 to 90 percent by weight per portion and, a mix of pasty meat with a pH of 6.0 to 7.3 and remaining small meat clumps at a pH of 6.5 or less are treated with a vacuum agitator, line mill and line mixer in a process that avoids mixing with oxygen gas.

However the above conventional methods have problems as follows. Namely in that the quality of raw meat deteriorates during long term storage and thawing in the process in which the meat is quickly frozen, distributed and processed into meat for consumption and into processed meat at the processing plant. A particular problem is that flavor bearing components may deteriorate due to drip during thawing. Besides the outflow of flavor-bearing components from the meat, the resulting drip containing low molecular protein and blood, which adheres to the surface of the meat causes a rapid fading of meat color and also emission of unwholesome meat and grass odors. A further problem is that moisture separation in the raw meat causes it to harden and have poor texture when the meat is chewed.

Another problem is that the meat yield declines due to water sublimation during refrigeration, or the drip outflow during refrigeration or thawing. And the drip outflow during freezing or thawing with consequent loss of the low protein component/flavor-bearing component is wasted and the meat must be disposed off. This disposal representing yet another loss of labor and equipment. At sales outlets such as supermarkets, the meat is maintained in showcases chilled or thawed at low temperatures to prevent the drip outflow, but when purchased and brought home by the consumer, the resultant drip during thawing caused discoloration of the meat and a drop in quality. Hamburger meat which is cooked after freezing or thawing produces a drip outflow of various animal greases and fat which cause the waxy components to form a whitish film when cooled. This has a rough and unpleasant texture and has a loss of flavor from the meat and fat when chewed.

As the result of drip outflow, frozen meat is considered to be of poor quality and has prompted strong demands for a processing method to improve frozen meat and give it increased value.

Conventional meat processing methods also have the following drawbacks.
1. The method disclosed in JP-B-54080456 calls for the dicing of muscle layers and tendons present in meat segments 5 cm X 10 cm, the insertion of additives and after agitating at low pressure, soaking for 48 hours at 3 to 5°C as required, followed by boiling for 60 to 90 minutes at 115 to 118°C and finally removal of the tangled muscle layers, tendons and arteries before the meat product can be used. This method thus involves a complex work process requiring considerable time and yielding poor productivity. This method caused cornbeef's color to change and also involves additives such as phosphates and sodium nitrite making it undesirable for health and safety reasons.
2. The method disclosed in JP-B-59039111 in which an agitator/mixer machine gently agitates and mixes the meat until the salt-soluble protein on the surface of the meat clump melts and forms a meaty paste without the agitator/blender machine harming the internal structure of the meat clump, thus blocks of meat are produced with a meat paste on the surface of the meat clump. This method however has the problem that reaction only occurs on the surface of the meat clump with no change in quality in the inner structure'of the meat clump. Additional drawback is that the job process over complicates and drives up the production costs'because production requires the process of a mold time of 12 to 48 hours and heating time of 2 to 3 hours in a low pressure state.
3. The method disclosed in JP-B-62029953 in which pickle fluid is vaporized, heated and injected into the meat and color fixers and pigments is added, however it was found that quality changes inside the meat cannot occur since the salt solution effect is weak since the concentration of food salt is low and the gelling/emulsification process is extremely sluggish. Further problems were presented also in the product texture such as elasticity and chewiness, with the additional drawback that discoloration was prone to occur since the meat tended to oxidize easily.
4. The method disclosed in JP-B-3180138 in which meat is soaked in pickle juice at concentrations closed those of body fluids. However when large block-like meat clumps are used, the pickle fluid cannot permeate into the inner part of the meat clumps, and uneven quality occurs and the color of the meat is poor. And an additional drawback is that it is difficult to improve the quality in fat layers and quality unevenness tends to occur poor productivity.
5. The method disclosed in JP-B-58037826 in which actomyosin is poured onto the meat clump surface. The actomyosin serves to join the meat clumps together. But when layers of fat are present in the meat clump; the reaction to the actomyosin bath does not occur and the meat tends to collapse during heating. Therefore use of entire pieces of scrap meat having fat layers is troublesome in a method that is both difficult to perform and lacking in productivity.
6. The method disclosed in JP-B-2308774 in which coagulation does not occur because fat layers present in the meat surface, further prevent a biochemical reaction from occurring, which means boosters must be added as secondary materials. The additional drawback is that the production process is complicated and lacking in productivity.

These conventional processing methods are not sufficient for resolving the above related problems.

European Patent Application EP-A-0 259 285 discloses a process for enhancing the eating qualities of an uncured pork product, in which uncured, raw or cooked, pork is impregnated with a pork stock solution containing phosphates and erythorbate, as well as optionally salt. It is stated that the resulting product has improved shelf life, flavor, juiciness, and water binding capacity. However, there is at present a marked tendency to avoid utilization of phosphates in food products for reasons of safety and health.

JP-B-5028587 teaches a method of manufacturing frozen chicken ground meat, in which method cooked chicken meats and optionally other animal or plant proteins are blended with salts, with plain salt as the main component, and subsidiary material, ground and frozen.

### DISCLOSURE OF THE INVENTION

This invention is intended to resolve the above existing problems. And an object of this invention is to provide processed meat of high nutritive value which is tender, elastic, capable of being processed as required, free of loss from deterioration, and of high yield utilizing low molecular weight nutrients such as drips, and provide meat foodstocks of this suitable for canned meat and ham sausage types and other applicable types of processed food. Another object of this invention is to provide a production method for processed meat that utilizes the osmotic pressure of cell membranes to penetrate high concentrate-low volume salt type, alkali solutions and vitamin C and E completely into the meat of skeletal parts and fat layers and, by their dispersion, induce a biochemical reaction inside the meat, to change meat quality within a short time in myofibril, perimysium, collagen, fatty materials, fats and cellular membrane structures in fats and, prevent discoloration in meat due to oxidation while the raw meat is refrigerated, to restore meat color, to prevent deterioration in meat characteristics during refrigeration and freezing and from drip outflow that' accompanies thawing and, to speedily ripen raw meat after having been butchered and also eliminate meat and grass odors and, add a gelling and emulsifying function of waxy components in the meat protein, greases and fats within the meat to change the meat composition and mature it, for meat of good elastic texture when chewed, good water retention and coagulation yet also having a toughness that can be adjusted as needed.

To accomplish this the invention comprises the following. Namely,

A processed meat selected from livestock meat comprised of chicken, pork, cattle, mutton and horse meat, and wild animal meat comprised of deer meat, wild boar meat and rabbit meat, comprising 0.2 to 5, preferably 0.3 to 4 and more preferably 0.5 to 2.5 parts by weight per 100 parts by weight of meat, of salt(s) selected from any one of NaCl, KCl, CaCl₂ and MgCl₂ or a mixture thereof; and further comprising 0.1 to 6, preferably 0.3 to 4 and more preferably 0.5 to 2 parts by weight per 100 parts by weight of meat, of alkali(s) selected from at least one of NaHCO₃, Na₂CO₃, KHCO₃, K₂CO₃ and NH₄HCO₃; and obtainable when said salt(s) are added to the meat as a 1.0 to 7.0 M solution in water, material meat drip or other meat drip, and said alkali(s) are added to the meat as a 0,1 to 4.0 M solution in water, material meat drip or other meat drip or a mixture of such drip and water.

Preferred embodiments of the processed meat according to the invention are seen in the subclaims thereto.

The invention also relates to a method of preparing processed meat, comprising the following steps A) and B) performed in either sequence or simultaneously, in the latter case with a mixed salt and alkali solution as defined in said following steps A) and B), respectively:
A) salt-dissolving cell membrane, myofibril, perimysium, collagen, lipid, fat and cell membrane and collagen in fat by impregnating 100 parts by weight of meat with 2 to 15 parts by weight of a highly concen-trated, 1.0 to 7.0 M, solution of salt(s) as defined above; and
B) alkali impregnation of 100 parts by weight of meat with 0.5 to 12 parts by weight of a highly concentrated, 0.1 to 4.0 M, solution of alkali(s) as defined above.

Preferred embodiments to this claimed method are defined in the subclaims thereto.

The forms of meat used are cut portions, blocks, steaks, slices, dices, minced, sticks, slender slices, paste, lumps, or lumps with bones. The meat is not limited to raw meat but also thawed from frozen, refrigerated or chilled meat. Meat of denatured quality during freezing may also be used. One kind of animal meat may be mixed with other kinds of animal meat depending on uses.

The salt used is such as quality salt, refined salt, processed salt with sodium glutamate as required, or one of or a mixture of KCl, CaCl₂, and MgCl₂.

The high concentrated salt solution, is 1.0 to 7.0 mo1 concentration, preferably 2.0 to 6.5 mo1 concentration depending on the kind of salt. Concentrations below 1.0 mo1 and above 7.0 are not desirable because of the following reasons : There is a general tendency, in that depending on the kind and portion of the meat, the solubility of the myofibril tends to be lower, the gelling ability and emulsification ability of the meat tends to decrease, and the ripening tends to take time when the salt concentration lowers below 2.0 mol and especially when it lowers below 1.0 mo1. On the other hand, when the concentration exceeds 6.5 mo1, the salty taste becomes strong, the meat hardens, and the meat taste loses, and this is particularly obvious at concentrations above 7.0 mo1. A salt concentration between 2.0 to 6.5 is therefore preferable because it improves the solubility of the cell membranes of bone muscle, myofibril, perimysium, collagen, fat, and cell membranes and collagen in fat, and the meat mesh is structurized, actomyosin dissolves from the bone muscle, adds to gelling, enhances ripening and adhesiveness.

The amount of salt added to 100 weight parts of meat is 0.2 to 5 weight parts, preferably 0.3 to 4 weight parts, more preferably 0.5 to 2.5 weight parts. Additional salt amount below 0.2 weight parts and above 2.5 weight parts are not desirable because of the following reasons : There is a general tendency when the amount solt added is less than 0.5 weight parts, the solubility of the myofibril tends to be lower, the gelling ability and emulsification ability of the meat tends to be decrease, and ripening tends to be retarded, and this is particularly obvious below 0.2 weight parts. On the other hand, when the added salt amount exceeds 2.5 weight parts, the salty taste becomes strong, and the meat is not useful as a food, depending on the processing methods, especially when it exceeds 5 weight parts.

The amount of salt is lower within above range, the taste of meat tend to have natural taste. The amount of salt is higher within above range, the presavation is improved by making the smoded or salt dry food.

The alkali agent is one of Na₂CO₃, K₂CO₃, NaHCO₃, KHCO₃, and NH₄HCO₃. Of these, NaHCO₃ and KHCO₃ are preferable because their pH is easily adjustable in spite of some problems in solubility.

The concentration of alkali solution is 0.1 to 4.0 mo1 concentration, preferably 1.0 to 3.0 mo1 depending on the kind of alkali agent. Concentrations below 0.1 mo1 and above 4.0 mo1 are not desirable. When the concentration is below 1.0 mo1 and especially below 0.1 mo1, the rate of increase in pH is low and gelling ability becomes unstable. When the concentration is above 3.0 mo1 and especially above 4.0 mo1, the pH factor is liable to grow too high, so the myofibril and perimysium are dissolved away excessively, and the meat is thus more prone to deteriorate depending on the kind of meat and the degree of ripening. This makes meat quality hard to maintain in later processing.

The alkali agent is added to 100 weight parts of meat protein material, is 0.1 to 2.7 weight parts, preferably 0.3 to 2.0 weight parts, and more preferably 0.4 to 1.3 weight parts dissolved in water or drip fluid depending on the alkali strength of the meat. As embodiment of this, 1 to 10 weight parts of high concentrated alkali agent solution are used for 100 weight parts of meat. If the pH factor is found to have rised, it can be adjusted by using a weak acid such as lactic acid.

The salt-dissolving, alkali impregnation process, salt-alkali impregnation process, and salt-dissolution and gelling ripening process are preferably done at temperatures below 20°C, more preferably below 10°C. When the temperature is above 10°C, the meat is liable to deteriorate depending on the degree of maturity. The alkali solution should be adjusted to have a pH factor of 5 to 10, preferably 6.5 to 8.5. The pH values below 5 and above 10 are not desirable. When the pH factor is below 6.5 the meat becomes soft, and this is especially evident below 5. When the pH factor exceeds 8.5, the meat tends to remarkably flatten and this is especially evident above 10.

Drip is acceptable as long as its quality is fresh or controlled so the amount of bacillus is kept to a minimum. Drip may be used solely in the diluted state or added to high concentrated alkali solution or high concentrated salt solution to impregnate the meat. The amount of water for dissolving the salt or alkali agent may be reduced because the drip contains some water. The flavor of the meat material can be restored by returning low molecular nutrients and tasty ingredients into the meat. For impregnation method, the total amount of drip may be mixed into the high concentrated salt solution, or mixed separately into the high concentrated salt solution and high concentrated alkali agent solution. The drip may also be added to other kinds of livestock meat. If the beef drip is added to chicken meat for example, a novel kind of chicken for young people can be produced.

When the meat is impregnated using an injector, the high concentrated salt solution, high concentrated alkali agent solution, or additive solution impregnation may be performed simultaneously at different locations on the meat lump. The sequence for injection of the concentrate solution may be salt followed by alkali, or vice versa. When the high concentrated salt solution is injected first, the color tone can be made to stand out more prominently. When the meat is fresh, or the color tone is not a matter of high priority (for example hamburger processing), the prior injection of alkali solution serves to improve the physical properties somewhat. The injection may be made on either or both sides of the meat lump. The meat lump may be separated into several small portions and subjected to the injection or spray process.

Cooking wine such as Japanese rice wine, or mirin, wine, brandy, sherry, or Chinese wine is preferred for use as alcohol. Japanese rice wine or mirin is used in amounts of 0.5 to 6 weight parts, preferably 1 to 4 weight parts to 100 weight parts of livestock meat. Amount outside that range are not desirable. When the amount is below 1 weight part, especially 0.5 weight parts, a fine luster and taste tend to disappear. When the amount exceeds 4 weight parts, especially 6 weight parts, the taste tends to be poor. Addition of cooking wine such as Japanese rice wine or mirin improves the soft sensation, the luster, and taste of the meat.

Xylitol, sorbitol, origosaccharide, glucose, galactose, fructose, lactose, table sugar, sucrose, malt sugar, glycerine, propylene glycol, or starch may be used as a saccharide. The amount of saccharide added to 100 weight parts of meat is 1 to 20 weight parts, and preferably 4 to 12 weight parts. Amount outside that range are not desirable. When the amount is below 4 weight parts, especially 1 weight part, the meat is liable to denature from freezing during storage and the meat quality also tends to be down. When the amount exceeds 12 weight parts, especially 16 weight parts, the meat tends to acquire a sweet taste and its color tends to change to brown.

The amount of vitamin C added to 100 weight parts of meat is 6 to 500 mg, preferably 20 to 300 mg. Amount outside this range is not desirable. When amount are less than 20 mg, and in particular less than 6 mg, the meat tends to oxidize and the meat color tends to fade. When the amount exceeds 300 mg, in particular is over 500 mg, the color development and antioxidant characteristics tends to vary widely depending on the type and freshness of the meat.

The addition of vitamin E together with the synergistic effect of vitamin C improve the color development and antioxidant properties when the vitamin E is added in amounts of 1 to 300 mg, and preferably 5 to 150 mg, to 100 weight parts of meat. If the meat is fresh, then only vitamin C need to be added.

The amount of albumen added to 100 weight parts of meat is 0.1 to 10 weight parts, and preferably 1.0 to 5.0 weight parts. Amount outside this range is not desirable. When amount is less than 1.0 weight part and in particular less than 0.1 weight parts, the supporting effect for the emulsification and gelling are reduced. Albumen added in 1.0 to 5.0 weight parts accelerates salt dissolution, emulsification and gelling of meat which has been denatured during long periods of storage in freezer.

Antioxidant to be used is, ethylenediamine tetraacetate, sodium dicalcium, erythorbic acid, or dibutyl hydroxyanisole. The amount of antioxidant to be added to 100 weight parts of meat is 0.005 to 4 weight parts, preferably 0.05 to 3 weight parts. Amount outside that range is not desirable. When amount is less than 0.05 weight parts, especially less than 0.005 weight parts, the meat tends to oxidize easily. When the amount exceeds 3 weight parts, and in particular over 4 weight parts, the taste becomes poor.

Other auxiliary materials used are;
bond reinforcing agents such as bouillon, meat extract, Curd-run 10 (made by Takeda Yakuhin CO., Ltd.), Curd-run 20 (made by Takeda Yakuhin CO., LTD.), Curd-run 30 (made by Takeda Yakuhin CO., LTD.), soybean protein powder, or casein sodium;
emulsifying agents such as albumen, lecithin, or saccharide ester;
functional agents such as chitosan, calcium, vitamins, dehydroacetic acid (DPA), EPA, collagen or glucomannan;
adhesion reinforcing agents such as sodium alginate, calcium citrate, corn starch, potato starch powder, or glucomannan;
preservation agent such as sorbic acid or potassium sorbinate;
deodorant such as Sun-Frabon HG T-200 (made by Taiyo Kagaku CO., LTD.);
animal or vegetable fiber such as soybean protein fiber, chitin, or meat paste;
animal or vegetable fat such as coconut oil, corn oil, rapa seed oil, port fat, lard and fish oil;
condiments such as pepper, glycine, L-glutanic acid, sodium L-glutaminate, sodium diinosinate, sodium diguanylate, fish peptides, beef powder, beef extract, pork extract, bonito extract, seaweed) extract, Ajinomoto (made by Ajinomoto CO., LTD.), or Amirich GCR (made by Ajinomoto CO. LTD.); and
spices such as pepper, ginger, paprika, nutmeg, mace, thyme, allspice, onion, garlic, coriander, cardamon, caraway, sage, laurel, marjoram, clove, or cinnamon. The spices may be used in any state; raw, dried, powder, extract, concentrated extract, or emulsion.

Since these materials are soluble in high concentrated salt solution, high concentrated alkali solution, or additive solution, they can be used to penetrate meat, by soaking the meat in these solutions containing the above materials. Additives in a powder state which are insoluble in such solutions may be diffused into the solution so that they are contained in the meat. Additives in a liquid state are preferable because they can be used to uniformly penetrate the meat. Addition of such materials makes it possible to bring out the taste of the meat more easily, or to add other flavors to provide a novel type of meat with enriched value.

In the arrangement described above, intended amounts of high concentrated salt solution and high concentrated alkali agent solution may be injected into meat to salt-dissolve the myofibril and perimysium in the meat, emulsify them, and form them into a fine mesh state by gelling to bring out to a maximum the taste and the nutritional value of the meat. Since these materials are diffused in and react with meat tissue and fat tissue, the solution concentration becomes lower, and the biochemical reaction completes within a short period of time and enzyme activity in the meat is at the same time hindered, the meat tissue is improved without being destroyed.

High concentrated salt solution and high concentrated alkali solution can be diffused widely throughout the meat by massage, vibration, ultrasonic treatment, or mixing and kneading to accelerate formation of the fine mesh or gelling. Use of a small amount of high concentrated salt solution makes it possible to change hard and low grade meat, such as taken from animal thighs (round, hind shank, ham) into tender, high quality meat. The tenderness of the meat can be changed as required by adjusting the concentration of salt and alkali. Acceleration of the salt-dissolution and gel maturing processes also improve the water retention properties and bonding properties of the meat and prevent drip from being produced. Improving the water retention properties and bonding properties prevents taste ingredients in water-soluble low molecular proteins, and various low molecular nutrients from draining away.

Since drip produced by thawing can be mixed into high concentrated salt solution and high concentrated alkali solution and restored to the meat, the nutritional value and taste are prevented from being lost. Addition of one kind of meat drip to another kind of meat drip also adds to the taste of that meat to provide a novel kind of meat with a different taste.

Since water-soluble condiments, nutrients, and functional agents can be mixed into the high concentrated salt solution and high concentrated alkali solution, the taste and nutritional value of the meat material can be changed to suit specific needs such as hospital diets for sick patients. Also, since the meat tissue is altered to form a fine mesh or gell and has high water retention rate and bonding strength, the meat juice does not come out when heat-treated. This improves the meat baking yield and swelling rate after cooking, maintains the nutritional value, tenderizes the meat and widens the potential cooking range.

Since the water retention rate and bonding strength are high, drip can be prevented to flow out during freezing, without having to use a large number of chemical agents, and the meat is also prevented from becoming denatured during cold storage or freezing. The high concentrated salt solution and high concentrated alkali solution improve the color of the meat, or restore a faded meat color to improve quality. The livestock and grass odors can now be deoderized due to the effects gained from addition of the salt solution and alkali agent and the formation of fine meshes and gelling.

### BRIEF EXPLANATION OF THE DRAWINGS

Figure 1 is a process diagram showing the status in the folding test.
Figure 2 is three rheometer measurement views.
Figure 3 is comparison examples of the rheometer measurement views.
Figure 4 is the rheometer measurement view of the second embodiment.
Figure 5 is the rheometer measurement view of the pork meat of the third embodiment.

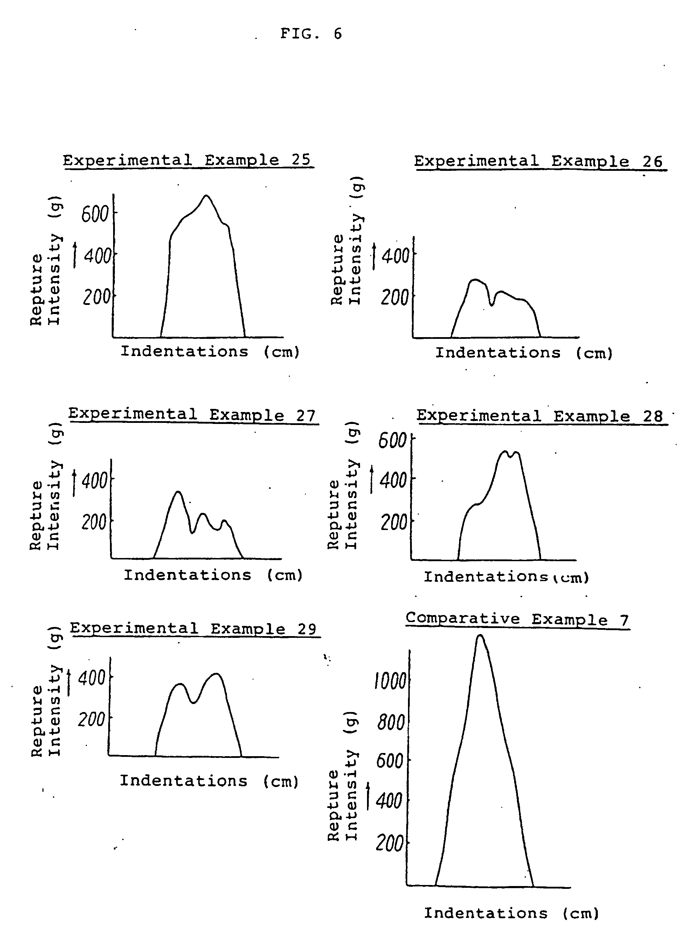

Figure 6 is the rheometer measurement view of the horsemeat of the fourth embodiment.

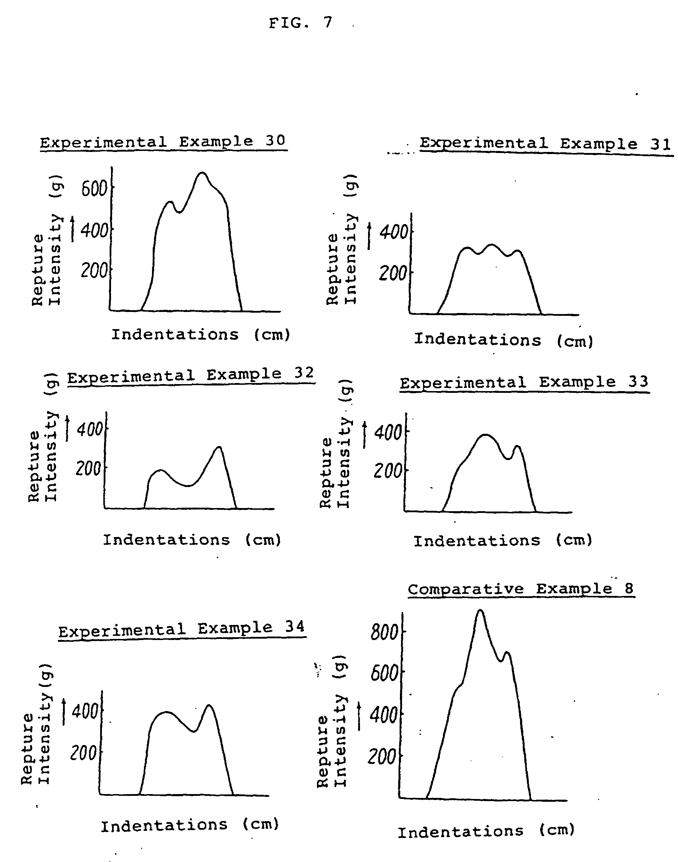

Figure 7 is the rheometer measurement view of the mutton of the fifth embodiment.

### OPTIMUM CONFIGURATION FOR IMPLEMENTING THE INVENTION

The following explains the first embodiment in detail.

### (Embodiment 1)

Frozen inner thigh meat of 11050 grams of Australian beef was used as the meat. After 18 hours of natural thawing, 300 grams each was taken from the lean meat and the fat meat for meat clump test samples. The pH factor for each clump was 5.5 for the lean meat and 5.7 for the fat meat. The drip obtained was 791 grams at the concentration of 6.7%. A drip fluid with a concentration of 60% was obtained 1318 grams by adding water to the drip. Salts used were NaCl (Hayashi Junyaku Co. Ltd.), KCl (Wako Junyaku Co., Ltd.) and MgCl₂ (Wako Junyaku Co., Ltd.). Alkalis used were NaHCO₃ (Wako Junyaku Co., Ltd.) KHCO₃ (Wako Junyaku Co., Ltd.) and sodium polyphosphorate. Alcohol types used were Japanese sake, cooking wine (Goto Breweries), and mirin. New Lemonade (SS Seiyaku Co., Ltd.) was used as vitamin C. Yuberak (Eizei Co., Ltd.) was used as vitamin E. Saccharides used were suger, sucrose and sorbitol fluid.

### (Experimental Example 1)

Twenty grams each of drip fluid obtained from the first embodiment were taken into two test tubes. As shown in the proportions in Table 1, one test tube contained food salt and the other NaHCO₃, both in solution. A high concentrated salt solution (2.6mo1) and high concentrated alkali solution (1.2mo1) were obtained. These were both placed in the injector and 5 grams of high concentrated salt solution and 5 grams of high concentrated alkali solution injected in equal quantities in 4 locations of the test samples. The high concentrated salt solution was injected first, and then the alkali solution. The test samples were then subjected to vibration treatment for 10 minutes, and afterwards matured for 30 minutes.

The additive absorption rate, pH, outer appearance tests (coloration, luster and elasticity) were measured in the samples obtained. The data is shown in Table 2. The additive absorption rate was found as a ratio of the unabsorbed amounts of salt and alkali concentrated solutions after maturation, to the fluid amounts prior to injection. A pH meter (manufactured by Shindengen Kogyo CO., LTD.) was used to measure pH. The outer appearance test was an average score value a rating from 1 to 10 points checked by 10 panelist members.

Next, product testing was performed by baking and boiling tests as the evaluations of the product test. Approximately half of the sample material was used as minced pieces by pulverized (pulverize time of 1 minute).

### a. Baking Test

In the baking test the sample was baked on the top side for 4 minutes and the bottom side for 3 minutes on a hot plate adjusted to 180°C. After this, the tests of the baking yield, expansion, sensory (elasticity and flavor) and folding tests were performed. After 50 grams of the minced meat of the baking sample was molded in a thickness of 9 mm mold with an inner diameter of 83 mm, a piece sliced in the top and bottom of the mold to a thickness of 5 mm was prepared. Data is shown in Table 3.

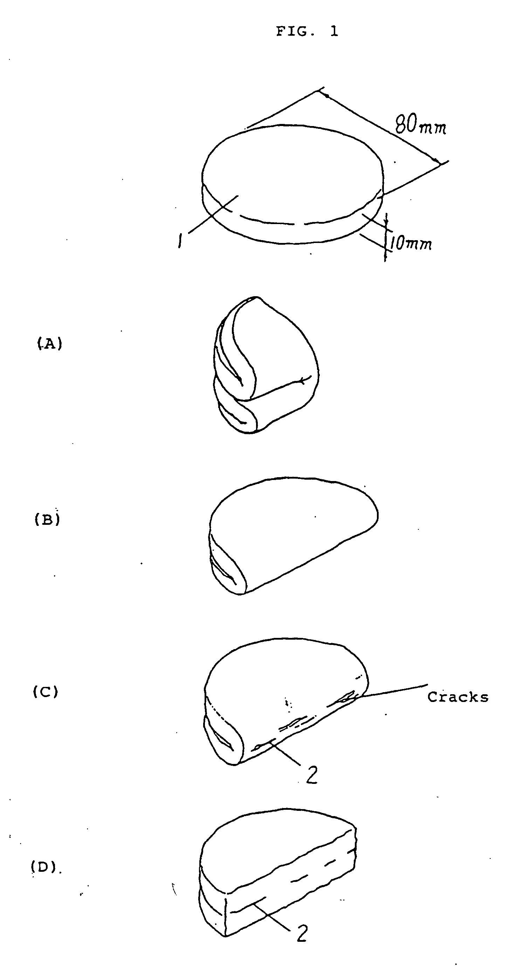

The bake yield was calculated by dividing the weight right after baking by the weight before baking. The expansion rate was calculated by dividing the volume after baking by the volume before baking, the each volume was calculated by measuring the diameter and thickness of the sample. The sensory test (elasticity and flavor) was found using the average value from a 1 to 10 point evaluation by a panelist of 10 members. The folding test was carried out in conformance with the methods listed in the page 399 document of "Fish Meat Kneaded Products - New Edition" (1986 edition) published by Koseisha-Koseikaku. Figure 1 is a process diagram showing the status in the folding test. Evaluation criteria for each sample in the folding test were as follows.
A : No cracks occur when folded in four
B : No cracks occur when folded in two
C : Cracks occur around half the radius when folded in two
D : Cracks occur across the entire radius when folded in two

### b. Boiling Test

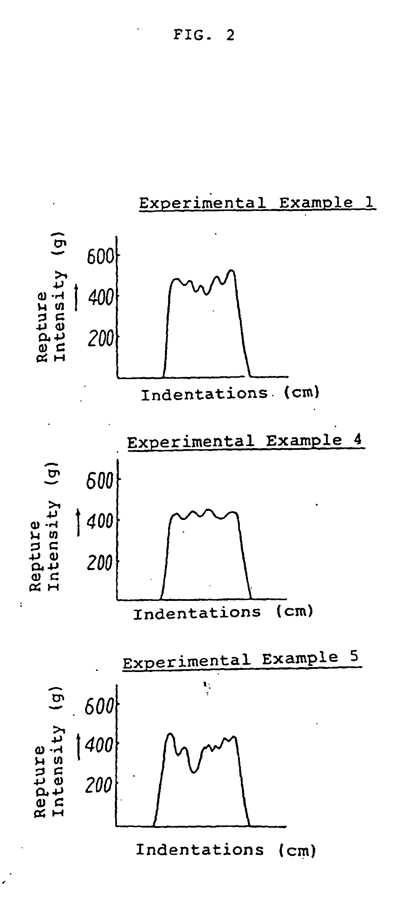

The sample was wrapped in a thin plastic film and placed in boiling water at 85°C for 40 minutes and then prepared into a sausage-type shape after which rheometer, sensory and folding tests were performed. A 90 gram minced sample of 30 mm diameter and 70 to 80 mm length was prepared for the boiling sample. A 90 gram minced sample of 30 mm diameter and 70 to 80 mm length was prepared for the rheometer test after which a 30 mm center section was cut off and a 30 mm diameter X 30 mm length sample piece was prepared. The results are shown in Table 4. The results of the rheometer test are shown in Figure 2.

The rheometer test machine manufactured by Fudo Kogyo Co., Ltd. was used in the rheometer test to find the rupture strength (g display showing hardness by penetration depth) and the width of indented (inward shaped) portions (cm display showing softness) as well as jelly strength (g·cm). The sensory test data and folding test data were found under the same conditions as in the previously mentioned baking test.

### (Experimental Example 2)

NaCl was added in proportions shown in Table 1, to one of the two sample tubes filled with the 20 grams of drip fluid of the first embodiment. NaHCO₃ and cooking wine as an alcohol were added to the other sample tube and dissolved. Thus a high concentrated salt solution and high concentrated alkali solution were obtained. Tests were performed just as with the first embodiment. The results are shown in Tables 2 through 4.

Also, Japanese rice wine and mirin (rice wine for seasoning) were added as alcohol in a mixture of equal combinations but largely the same results as in experimental example 2 were obtained.

### (Experimental Example 3)

NaCl and vitamin C and E were added in proportions shown in Table 1, to one of the two sample tubes filled with the 20 grams of drip fluid of the first embodiment, NaHCO₃ and as cooking wine were added to the other sample tube and dissolved to obtain a high concentrated salt solution and a high concentrated alkali solution. Tests were performed just as with the first embodiment. The results are shown in Tables 2 through 4.

Also, Japanese rice wine and mirin (rice wine for seasoning) were added as alcohol in a mixture of equal combinations to an equal amount of sherry, and almost the same results as in experimental example 3 were obtained.

### (Experimental Example 4)

NaCl and vitamin C and E and saccharide were added in proportions shown in Table 1, to one of the two sample tubes filled with the 20 grams of drip fluid of the first embodiment, NaHCO₃ and cooking wine were added to the other sample tube and dissolved to obtain a high concentrated salt solution and a high concentrated alkali solution. Tests were performed just as with the first embodiment. The results are shown in Tables 2 through 4. The results of the Rheometer tests also are shown in Figure 2.

Also, a mixture of salt and KCl in a ratio of 9 to 1, and a mixture of salt and MgCl₂ in a ratio of 8 to 2 were used, instead of only salt, and almost the same results as in experimental example 4 were obtained.

### (Experimental Example 5) (Not according to the invention)

NaCl and vitamin C and E and saccharide were added in proportions shown in Table 1, to one of the two sample tubes filled with the 20 grams of drip fluid of the first embodiment, NaHCO₃ and cooking wine were added to the other sample tube and dissolved to obtain a high concentrated salt' solution and a high concentrated alkali solution. After injection process of the sample as was done in experimental example 1, and after being placed in a freezer at -25°C for 10 days, the sample was taken out and checked for any changes in characteristics of freezing by carrying out testing in the same manner as done with experimental example 1. The results are shown in Tables 2 through Tables 4. The results of the Rheometer tests also are shown in Figure 2.

Also, KHCO₃ and sodium polyphosphoric acid in the same amounts were used instead of NaHCO₃ and almost the same results as in experimental example 5 were obtained. Sorbitol was used instead of sugar, and the same results were obtained.

### (Experimental Examples 6 to 9)

20 grams each of water was prepared without using the drip fluid of the first embodiment in two test tubes in the same proportions as in experimental examples 1 through 4. NaCl, vitamin C solution, vitamin E solution and saccharide were added to one of the test tubes, and NaHCO₃ and cooking wine were added to the other test tube, and tests were performed using the same methods as in experimental examples 1 through 4. The results of the test are shown in Tables 2 through 4.

### (Experimental Example 10)

A test solution with the same constituents as in experimental example 9 was prepared, and the injection process sequence altered so that injection was first done with the high concentrated alkali solution, then the high concentrated salt solution, and then evaluated with the same method as in experimental example 9. The results of the test are shown in Tables 2 through 4.

### (Experimental Examples 11 to 12)

### Effects of the alkali solution

NaCl was added in the proportions shown in Table 1 to one of two test tubes filled with 20 grams of drip fluid of the first embodiment, and NaHCO₃ was added to the other test tube and each then dissolved to obtain a high concentrated salt solution and a high concentrated alkali solution. Testing was performed in the same manner as experimental example 1. The results of the test are shown in Tables 2 through 4.

### (Experimental Examples 13 to 14)

### Effects of the NaCl

NaCl was added in the proportions shown in Table 1 to one of two test tubes filled with 20 grams of drip fluid of the first embodiment, and NaHCO₃ was added to the other test tube and each then dissolved to obtain a high concentrated salt solution and a high concentrated alkali solution. Testing was performed in the same manner as experimental example 1. The results of the test are shown in Tables 2 through 4.

### (Comparative Example 1)

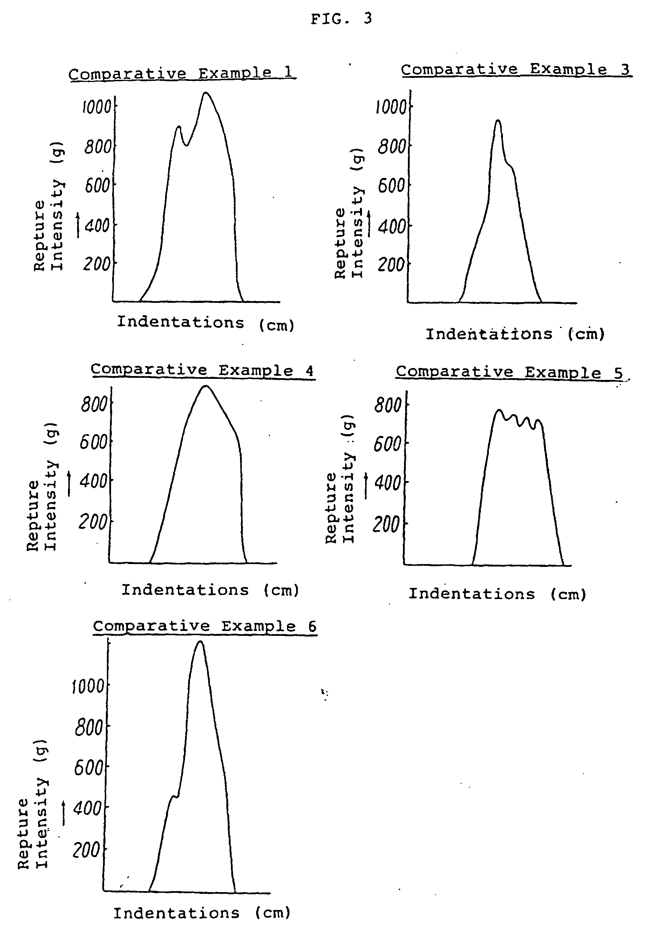

As shown in Table 5, none of drip fluid nor other additives such as water, NaCl, alkali solution, and alcohol were added to the test sample. Testing was carried out with only a 300 gram meat clump, in the same manner as experimental example 1. The results of the test are shown in Tables 6 through 8. The results of the rheometer tests also are shown in Fig. 3.

### (Comparative Example 2)

After injection process of a meat clump with only 40 grams of water in the same manner as experimental example 1, testing was performed with the same method as experimental example 1. The results of this test are shown in Tables 6 through 8.

### (Comparative Example 3)

After injection process of meat clump with only 40 grams of drip fluid in the same method as experimental example 1, testing was performed with the same method as experimental example 1. The results of this test are shown in Tables 6 through 8. The results of the rheometer tests also are shown in Fig. 3.

### (Comparative Example 4)

NaCl was added in the proportions shown in Table 5 to one of two test tubes filled with 20 grams of drip fluid of the first embodiment and dissolved, nothing was added to the other test tube and testing was performed with the same method as experimental example 1. The results of this test are shown in Tables 6 through 8. The results of the rheometer tests also are shown in Fig. 3.

### (Compararive Example 5)

NaHCO₃ was added in the proportions as shown in Table 5 to one of two test tubes filled with 20 grams of drip fluid of the first embodiment and dissolved, nothing was added to the other test tube and testing was performed with the same method as experimental example 1. The results of this test are shown in Tables 6 through 8. The results of the rheometer tests also are shown in Fig. 3.

### (Comparative Example 6)

Cooking wine was added in the proportions shown in Table 5 to one of two test tubes filled with 20 grams of drip fluid of the first embodiment testing of the other tube was performed with the same method as experimental example 1. The results of this test are shown in Tables 6 through 8. The results of the rheometer tests also are shown in Fig. 3.

As clearly shown in Tables 5 through 8, even if water was injected there is virtually no significant difference in baking yield compared to the unprocessed meat (comparative examples 1 and 2), but when injected with the drip fluid, the backing yield of drip fluid provide to improve several % as compared to the meat stock with no water separation occurring.

Injections only with drip fluid and an alcohol additive showed almost no significant result in baking yield and elasticity (comparative examples 3 and 6). The issue of juice from the meat was also drastic during the baking test. The drip fluid added with salt and alkali solution had a baking yield of about 8 percent, which is an improvement of 16 percent and the elasticity was also better but results of the folding and sensory tests were still unsatisfactory (comparative examples 4 and 5).

In overall contrast with the comparison samples, however, the processed meat of the embodiments had an exceedingly high additive absorption rate, and an improvement in bake yield from 128 to 138 percent was also found when evaluated against comparison sample 1. Further, the folding test data shows D rank items in the comparison sample, but almost A rank in the embodiment. The meat quality was extremely tender like fillet meat with no fiber-like sensation, and having a taste like a very high grade of roast beef. The chewiness revealed no sinewy toughness, and had the same texture as the usual fillet of roast beef (impression of all test personnel).

This is due to the brining effect from the high concentrated salt solution which steadily dissolved parts such as the sinew peripheral membranes, myofibril, perimysium, and also the complementary effect from the high concentrated alkali solution which caused a fine mesh structure and accompanying gellification in the meat composition to progressively change and ripen the meat. When meat pieces of each comparison example and embodiments 1, 4 and 5 were then examined with an optical microscope, it was found that while myofibril could clearly be seen on the comparison sample, the sinew peripheral membranes and perimysium had been removed and the interweaving of the muscle fibers could be seen, having a totally different structure.

This is thought due to the dissolution of the muscle membranes and perimysium forming a fine interwoven mesh structure which improved the additive absorption rate and baking yield of the processed meat, and further caused a remarkable expansion of the meat during baking (a 163 percent improvement in embodiment 5 as against comparative example 1). During the baking tests the comparison samples all had juice coming out in large amount of smoke, but since the experimental examples had good water retention and since the muscle membranes, myofibril and perimysium characteristics had changed while dissolving (results observed under microscope), their elongation and contraction tended to constrict the flow of juice from the meat and increase the swelling rate. The so-called syringe effect which accompanied this has further increased the swelling rate almost completely stopping the flow of juice in keeping it in the meat. The smoke emitted was correspondingly slight and the cooked meat had an impression of plumpness.

When alcohol was added, the elasticity and soft sensation improved somewhat along with better luster and gloss so that when made into items such as hamburger, a higher product value was attained (experimental examples 1,2, 6 and 7). Observation of deterioration from freezing was carried out on the processed meat after placing in a freezer and storing at - 25°C for 10 days showed absolutely no deterioration with the product (experimental example 5) evaluation unchanged from experimental example 4. A product evaluation performed after the remaining test meat of experimental example 4 was then stored in a freezer for 30 days at -25°C, showed almost no deterioration. This is due to the complementary effects of the salt and alkali solutions causing the mesh-like structure of the meat protein, and also the low molecular protein which changes meat quality, accumulating in the meat and not only preventing drip but having an anti-oxidizing effect on the meat surface.

In contrast to the test example of the embodiment, the comparison examples had a gel strength and rupture strength of over 200 percent but the sensory tests revealed that this meat had a dried, crumbly sensation of tough meat that would not become pasty even if chewed somewhat, with a gritty feeling in the mouth and a bad texture, but the embodiment on the other hand had elasticity and good texture when bitten so that when chewed, juice came out of the meat piece making it flavorful, easily becoming moist and easy to chew, having an exceedingly fine eating sensation and texture.

The meat of the embodiment had no livestock-like smell after vibration treatment, with the meat thought to have been deoderized by the change in structure.

Examination of the rheometer test data showed that among the comparative examples all those without salt or alkali solution additives had sharp peaks on their ends (comparative examples 1, 3 and 6) due to the high rupture resistance, however those added with salt had a peak shape with an obtuse angle, and those added with alkali solution had a level sawtooth shape on their peaks with lower rupture strength. In contrast, the items of the embodiment had low rupture strength, and all were flat at the top having sawtooth patterns with multiple concave/convex portions. This gave a more pleasant eating sensation on account of the numerous convex, concave portions providing the texture and elasticity, along with a moderate rupture strength of varying quality.

It was also found that gelling could be performed with extremely small amounts of NaCl, 0.5 to 5 grams (meat of 0.16 to 1.6 weight parts) accounted for by the complementary effect of the alkali solution.

A high test evaluation rating was obtained for 4 grams of NaHCO₃ (meat of 1.3 weight parts). In the case of NaHCO₃, six grams were dissolved in warm water (meat of 1.9 weight parts) and after injection the same effect as in experimental example 12 was obtained.

This showed that the quantity of alkali solution with its high solubility can be increased. However when the quantity of alkali is too high, the alkali effect becomes too strong and tends to cause the taste to drastically deteriorate.

Product evaluations and meat processing evaluations were performed on meat of experimental example 1, in which NaCl was dissolved in drip, and the other utilized a solution of NaHCO₃ dissolved in water not utilizing the drip, however results obtained were identical to experimental example 1.

Tests were also performed in which the high concentrated salt solution and high concentrated alkali solution were painted on with a brush instead of being injected, and then otherwise tested the same as experimental example 1. Results showed no significant change from experimental example 1, however the meat clump shaped which ripened in merely 30 minutes by injection treatment, took a long time to penetrate into the inner parts of the meat after the paint brush application. In meat such as steak which comes in a flat shape, this paint brush method proved simple and easy to use.

The penetration method was next verified under identical conditions as in experimental example 1. The results obtained were largely identical to those of experimental example 1. The findings from the penetration method proved largely identical to those of the paint brush application method.

Massage treatment was next performed as a substitution for the vibration treatment of experimental example 1. Results obtained were identical to those of experimental example 1. This test showed that a combination of the injector and massage machines were able to process a large quantity of meat in a short time.

A microscope was used to confirm the effects of the salt and alkali solution on the sinew and fat structures in the meat.

Five grams of meat each were take as test samples from the sinew portions of the meat of embodiment 6 and comparison example 1. After freezing them in liquid nitrogen, they were wrapped in parrafin and sliced into segments of 10 micron meters and the paraffin removed. They were next dyed with blue thread fluid and examined under a 400 power optical microscope.

Examination clearly showed the cell membranes of comparative example 1, but the cell membranes of embodiment 6 had ruptured with connective fluid flowing throughout. The brine and emulsifying gelling condition was found to have progressed.

Next samples of 5 grams each were taken from the fat portion of the meat of embodiment 6 and comparative example 1 in the same manner as related above, and samples fabricated for observation with the microscope. The examination was performed under a 400 power optical microscope.

Examination clearly showed the cell membranes of comparative example 1, but the cell membranes of embodiment 6 had ruptured with connective fluid flowing, showing they had dissolved overall. The brine and emulsifying gelling conditions were clearly verified, and the fat and cell structures were found to have totally integrated and had improved quality.

### (Embodiment 2)

After frozen breast meat of domestic poultry of 1510 grams was naturally thawed for 18 hours, it was cut into 300 gram pieces for use as test samples. The pH was 5.5. A drip of 220 grams was obtained at a drip rate of 12.6 percent. Water was added to the drip to obtain a drip concentration of 75 percent yielding a drip fluid of 294 grams.

### (Experimental Examples 15 to 19)

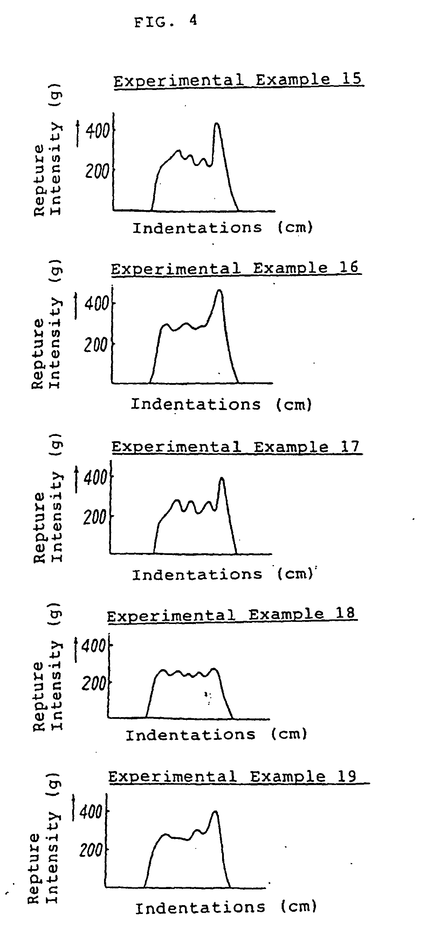

Drip fluid was taken in 20 grams for each of two test tubes and mixed in the proportions shown in Table 9, one tube added with NaCl and the other test tube added with NaHCO₃ to dissolve and respectively form a high concentrated salt solution and a high concentrated alkali solution. Samples were next obtained just as with experimental example 1 and testing and evaluation performed. The results are shown in Tables 10 through 12. Results of the rheometer tests are shown in Fig. 4.

As clearly shown in Tables 10 through 12, the baking yield increases and the swelling rate improves in the poultry meat as the amount of alkali solution is increased, however it was found that the rupture strength and gelling strength are reduced (experimental examples 15, 16 and 17). Also as the salt additive is increased, the baking yield, rupture strength and gelling strength tend to level off after having improved to some extent but the swelling rate increases. The elasticity increases as the alkali solution or salt additive is increased and an A rank was achieved in the folding test (experimental examples 18, 16 and 19). However the flavor becomes salty when the salt additive level reaches 5 grams (1.6 weight percent per meat), making it therefore ideal for dried food products and smoked meat. The absorbance rate of drip also lowered, with a decrease in the quantity of salt additive (experimental examples 18, and 16).

When only the drip and salt were injected into the poultry meat, it was found to have a damp quality along with a sensation of firmness. The raw meat also felt swollen and elastic. But as the alkali solution was increased, these traits became more outstanding with shiness appearing along with viscosity, and the meat having a bounce or jiggle when touched. The fat portion showed the same trends as the meat portion, with coloration becoming brighter and remarkable improvement being shown as salt and alkali solution was added.

Extremely excellent results were obtained in the baking test, with exceptional improvement in outer appearance and texture (experimental examples 16 and 17) compared with conventional methods. After baking, the fat portions in particular became gelled and were soft and water retentive. Even after being left in a freezer for several days, the meat had not hardened and was still soft, which is a special advantage not found in conventional methods.

When the quantity of salt additive is reduced the surface and interior of the meat had a bleached appearance and when left standing at room temperatures the meat rapidly deteriorates emitting raw, unpleasant odors. The meat must therefore have salt added to it in prescribed quantities depending on the freshness of the meat stock.

Five grams of cooking wine was added as an alcohol to the salt concentrate solution in experimental example 16, along with 167 mg of vitamin C, 25 mg of vitamin E, 7 mg of saccharide, and the remainder of the testing and evaluation performed in the same manner as experimental example 1.

Results showed a remarkable improvement from the addition of vitamins C and E solution to the high concentrated salt solution of experimental example 16. The addition of vitamin C and E solution also is remarkably effective in preventing discoloration while the meat is being preserved. The taste of the meat was found to be improved when alcohol is added. The addition of saccharide improved the meat's preservability and even when product testing was done after being stored in a freezer for 10 days at -25°C, virtually no change was found in the product tests and outer appearance items such as meat color.

### (Embodiment 3)

Domestic pork tenderloin of 1510 grams of frozen meat was naturally thawed for 18 hours and then cut into test material of 300 grams each. The pH was 5.5. A drip of 130 grams was obtained at a drip rate of 7.8 percent. Water was added to the drip to obtain a drip concentration of 50 percent yielding a drip fluid of 260 grams.

### (Experimental Examples 20 - 24)

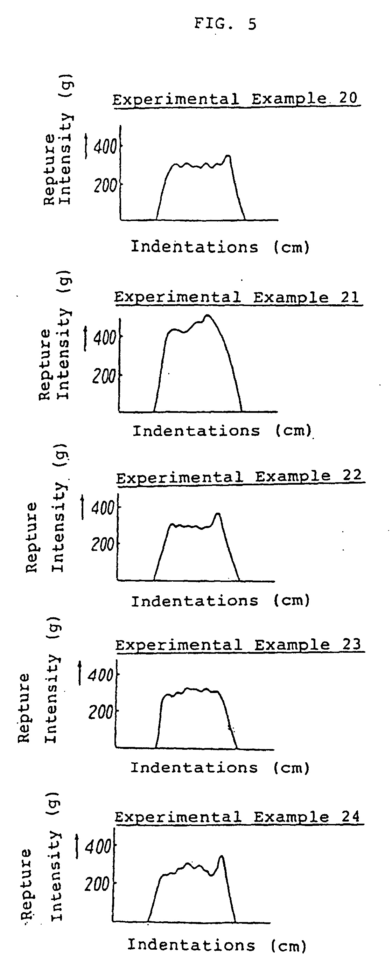

Drip fluid was taken in 20 grams each for two test tubes and mixed in the proportions shown in Table 13, with one tube added with NaCl and the other test tube added with NaHCO₃ to dissolve, and respectively form a high concentrated salt solution and a high concentrated alkali solution. Testing and evaluation was performed as in experimental example 1. The results are shown in Tables 14 through 16. Results of the rheometer tests are shown in Fig. 5.

As clearly shown in Tables 14 through 16, when the quantity of salt and quantity of alkali solution in the drip fluid is little, the initial absorption is good; but as shown in Table 14, after 30 minutes the meat juice of the drip separates and meat additive absorption declines (experimental examples 20 and 23). However it was found that when alkali solution is added, the absorption rate of the additive solution improves remarkably (experimental examples 21, 22, and 24).

When the alkali solution is increased, the baking yield and swelling (or expansion) improve but the rupture strength and gelling strength decline. The coloration and sensory tests showed a remarkable improvement in elasticity and taste (experimental examples 20 to 22).

The interrelation between salt additives and baking yield was not found in these experiments, but data from the folding tests revealed that gel strength improved as the salt level increased. However an exceedingly strong gel in the pork tenderloin was obtained using 50 percent of less salt quantities than by making fish paste rolls from fish meat.

In the baking test the pork tenderloin of embodiment 3 was prepared with no additives (conventional method). When testing was performed under the same conditions as experimental example 21, each test piece of experimental example 21 was found to have 20 to 30 percent higher bakeing yields and swelling rates than the conventional method. The sensory tests also received considerably higher ratings than those for the conventional method.

Five grams of cooking wine as an alcohol, 167 mg of vitamin C, 25 mg of vitamin E and 10 grams of saccharide were added to the high concentrated salt solution of experimental example 21, and testing and evaluation identical to that of experimental example 21 performed. Results showed a remarkable improvement in meat color with only slight changes over time from the effect of the addition of the vitamin C and E solutions. The addition of alcohol was also found to increase the quality of the shiness and luster. The addition of saccharide was found to improve the preservability and virtually no changes were found in the product tests and outer appearance for such factors as meat color, even after having been left in a freezer for 10 days at -25°C. In pork, saccharide was added in amounts larger than 1 percent part by weight however in the case of beef. In generally the pork is soft it was found better to add saccharide more liberally in pork, though this varies depending on the portion of the meat and its freshness.

### (Embodiment 4)

After Chinese mixed horse meat of a frozen product of 2200 grams (fat content of approximately 30 percent) used as the meat in the embodiment, was naturally thawed for 18 hours, it was cut into 300 gram pieces for use as test examples. The pH was 5.8. A drip of 109 grams was obtained at a drip rate of 4.7 percent. Water was added to the drip to obtain a drip concentration of 25 percent yielding a drip fluid of 436 grams.

### (Experimental Examples 25 to 29)

### (Comparative Example 7)

The 20 grams each of drip fluid of experimental sample 4 was placed into two test tubes and then mixed in the proportions shown in Table 17, with one tube added with NaCl and the other test tube added with NaHCO₃ to dissolve and respectively form a high concentrated salt solution and a high concentrated alkali solution. Just as with experimental example 1, testing and evaluation were performed. The results are shown in Tables 18 through 20. Results of the rheometer tests are shown in Table 6.

As Tables 18 through 20 clearly show, the additive absorption rate increased along with an increase in the quantity of alkali solution, the baking yield and swelling (expansion) improved remarkably, the sensory function and folding test also yielded an extremely high rating. The rheometer tests showed that the rupture strength and gell strength had lowered, but the sensory tests showed that elasticity and flavor had improved remarkably.

The addition of salt, and the addition of alkali solution both showed almost identical tendencies.

It was also found that when the alkali solution content is low, the shineness and elasticity deteriorate, moisture and waxy elements become large in particular during the baking test and smoke is prone to appear (experimental example 25). When the alkali solution content is too large, the pH factor climbs drastically and quality problems occur so that even if lactate is increased in follow-up handling there is a limit to how much the pH factor can be lowered (experimental examples 26 and 27). The lower the salt content, the more the additive absorption rate drops, and the shineness and elasticity deteriorate, along with water and wax separating and tending to come out during the baking test (experimental examples 26 and 28).

A comparison of the embodiment with comparative example 7 clearly shows that even with the comparative example 7 injected with the additive solution, after 30 minutes of maturing, water separation occurred and the additive absorption rate was only 59 to 77 percent. As a result the baking yield was only 84 to 70 percent of that of the embodiment, and a swelling (or expansion) rate of only 63 to 82 percent was verified. Water and wax flowed out during the baking test and an extremely large amount of smoke was emitted. The results of the sensory tests were also very poor. On looking at the rheometer measurement views the comparative examples had a remarkably strong rupture strength, with some points clearly sharp. On comparing photographs taken with an optical microscope of experimental example 26 and comparative example 7, the perimysium and muscle membranes of experimental example 26 had dissolved away and a fine mesh-like structure could be seen, however these could not be observed at all in comparative example 7.

In the sensory tests the comparative example 7 had a dried out feel, was hard and would not become pasty no matter how much it was chewed, having a rough feel in the mouth and poor texture. The embodiment on the other hand, while elastic had a firm feel in the mouth and when chewed, the meat juice came out with an extremely delicious flavor. It easily formed a moist pasty lump after chewing with good eating sensation and texture.

On looking at the data from the rheometer tests, the comparative examples without the salt and alkali additives all maintained a sharp pointed shape due to their high rupture strength (comparative example 7) but examples with the salt additive changed to blunted shapes, while those with the alkali additive had sawtooth shapes on their tips, and a level shape with a lower rupture strength. In contrast, the embodiment examples had low rupture strength and their peaks were all flat on the top, also having numerous convex/concave portions with sawtooth shapes. These numerous convex/concave portions are thought to contribute elasticity for the meat texture, and also give the firm pleasant taste in the mouth.

Since fat portions were also blended in with mixed horsemeat in this embodiment, a clear correlation with salt and alkali solution quantities could not be obtained due to the influence of the fat portions and the mixed horsemeat, however the trends were found to be quite similar to those obtained with poultry meat.

A cooking wine (as an alcohol) of five grams, vitamin C solution of 167 mg, vitamin E solution of 25 mg and saccharide of 7 g were added to high concentrated salt solution experimental example 26 and tested and evaluated the same as experimental example 26. As a result the color of the processed meat was found to be improved compared to experimental example 26 due to the addition of vitamin C solution, E solution and alcohol and saccharide. In addition, the product shiness, luster and the preservability were also found to be improved.

The color of the meat and fat portions was in particular found to be remarkably improved by the addition of vitamin C solution and E solution. Another result was that the addition of vitamin C and E solutions was extremely successful in preventing discoloration of the meat while preserved. Adding alcohol improved the overall flavor. The addition of saccharide improved the meat's preservability and even after being stored in a freezer for 10 days at -25°C, virtually no change was found in the product tests and outer appearance items such as meat color.

### (Embodiment 5)

Mixed Australian mutton consisting of 2300 grams of frozen meat was naturally thawed for 18 hours and then cut into test material of 300 grams each. The pH was 5.9. A drip of 176 grams was obtained at a drip rate of 7.1 percent. Water was added to the drip to obtain a drip concentration of 47.5 percent yielding in a drip fluid of 370 grams.

### (Experimental Examples 30 - 34)

### (Comparative Example 8)

Drip fluid was taken in 20 grams each for each of two test tubes and mixed in the proportions shown in Table 21, with one tube added with NaCl and the other test tube added with NaHCO₃ to dissolve and respectively form a high concentrated salt solution and a high concentrated alkali solution. Testing and evaluation were performed as in experimental example 1. The results are shown in Tables 22 through 24. Results of the rheometer tests are shown in Table 7.

As clearly shown in Tables 22 through 24, addition of alkali solution not only improves the additive absorption rate but also remarkably improves the swelling rate. The baking yield also improves but tends to level off when 2 grams of NaHCO₃ are used (0.66 weight parts per meat). The additive effects of the NaCl were evaluated but generally showed the same results as the alkali solution. When the quantity of alkali additive solution was little, the elasticity was insufficient and the rupture strength was high. During baking the meat juice tended to come out in large quantities, the odor had been eliminated compared with comparative example 8, but the odor of mutton could be sensed (experimental examples 30 and 31). The baking yield was confirmed as being poor when the amount of salt additive was little. The baking yield and swelling rate were low compared to embodiments 1 through 3, the shiness and elasticity were also bad, but this was thought due to the fat portions in the mixture.

On comparing with comparative example 8 the embodiment was found to have a large additive absorption rate of 134 to 160 percent due to the complementary effects of the alkali solution and salt, as a result the baking yield improved 110 to 131 percent and the swelling rate (expansion) improved 141 to 162 percent. The sensory tests also yielded extremely high ratings.

The comparative example had a gell strength and rupture strength higher than 200 percent when compared with the example from the embodiment, however the sensory tests showed the comparative example 8 had a dried out feel, was hard and would not become pasty no matter how much it was chewed, had a rough feel in the mouth and poor texture. The embodiment on the other hand, while elastic had a firm feel in the mouth and when chewed, the meat juice came out with an extremely delicious flavor. It easily formed a moist pasty lump after chewing with good eating sensation and texture.

On looking at the data from the rheometer tests, the comparison examples without the salt and alkali additives all maintained a sharp pointed shape due to their high rupture strength (comparative example 8), but examples with the salt additive changed to blunted shapes, while those with the alkali additive had sawtooth shapes on their tips, and a level shape with a lower rupture strength. In contrast, the embodiment examples had low rupture strength and their peaks were all flat on the top, also having numerous convex/concave portions with sawtooth shapes. These numerous convex/concave portions are thought to contribute elasticity for the meat texture, and also give the firm pleasant taste in the mouth.

Five grams of cooking wine was added as an alcohol to the high concentrated salt solution in experimental example 31, along with 167 mg of vitamin C, 25 mg of vitamin E, 7 grams of sugar, and the remainder of the testing and evaluation performed in the same manner as experimental example 32. Results showed a remarkable improvement from the addition of vitamin C and E solutions to the high concentrated salt solution of experimental example 31. The addition of vitamin C and E solution also proved remarkably effective in improving the color of the meat. They were also extremely effective in preventing discoloration while the meat was preserved. The shiness and luster of the meat also improved with the addition of alcohol along with the taste of the meat. The addition of saccharide improved the meat's preservability and even when product testing was done after being stored in a freezer for 10 days at -25°C, virtually no change was found in the product tests and outer appearance items such as meat color.

### (Embodiment 6)

Australian beef was used as the meat, which was 300 grams of refrigerated inside chuck roll with outer layer fat portions having a 1 to 2 cm thickness. The drip fluid of the first embodiment was utilized, NaCl as the salt and NaHCO₃ as the alkali were dissolved into the fluid and then injected into the meat for product evaluations the same manner as experimental example 1.

As a result, the fat processed in this manner showed deteriorated additive absorbance but the luster had increased. In the baking test the dissolved items and the dissolved fat elements had intertwined in clumps due to the heat, producing a soft fat with good stability not seen up to now in conventional methods.

Due to the injection of additives, the collagen, gellatin, blood and protein fibers had mutually reacted with the salt and alkali solvent to dissolve and their fibers and protein molecules intertwine. This process was hastened overall by vibration treatment and fine mesh-like structures were formed by structures in the fat and gelling occurred.

### (Embodiments 7 and 8)

Thigh meat of Australian beef of embodiment 1 was used as the meat and the drip fluid of the first embodiment'was prepared in 20 grams each. Bonita extract of 0.5 grams (0.17 weight parts per meat of embodiment 7) or konbu (seaweed) extract of 0.75 grams (0.25 weight percent per meat of embodiment 8) were added to the high concentrated salt solution and dissolved in the fluid. After injection just as with experimental example 1, evaluation was done just as with experimental example 1.

Results showed virtually no change from experimental example 1 in outer appearance and additive absorption rates of,the processed meat. In the product tests a slight improvement was verified in the baking yield and swelling rate but almost no change was found in the folding and rheometer tests. However in the sensory tests the flavor was found extremely fine, full-bodied beef roast unmatched in conventional examples (rating by all of the test members). Thus it was found that by dissolving various condiments in additive fluid, the condiment in the meat combined with the meat taste to produce a completely original meat. In contrast to conventional methods which spread or sprinkle a condiment on the surface of the meat, this involved combinations inside the meat so that the flavor of the meat itself was brought out, this flavor can be adjusted to meet the particular application, making the meat easy to consume.

Next, based on this knowledge, verification of each type foodstuff was performed. As a verification method, besides producing the food material of the embodiment, a foodstuff was produced identical to conventional methods for use as a comparison example. The sensory testing and outer appearance tests were performed by 10 panelist members.

### (Embodiment 9)

The block of frozen beef roast used as the meat was thawed in the defroster while monitoring the temperature between 2 and 5°C. The drip obtained from thawing was utilized in the alkali solution and salt-dissolving solution.

Food salt was dissolved in the drip fluid to reach a salt concentration of 4.3 mo1 in the 450 cc of fluid. Then 150 cc of mirin, 15 grams of Amirich GCR (condiment), 180 grams of powdered sorbitol, and a 15 gram mixture of vitamin C and E were blended in, dissolved to form the mixture and then injected into the mesh-like structure of the the thawed 9000 gram beaf roast block. The meat was then given vibration treatment for 5 minutes with an electric massage machine to promote the brining process.

Next, as an alcohol, 150cc of Japanese rice wine was mixed into the 420 cc high concentrated salt solution into which NaHCO₃ had been dissolved to reach a 2.0 mo1 concentration, and after injection into the mesh-like structure of the meat, vibration treatment was done for 10 minutes with an electric massage machine to promote the gelling maturation process.

Next, after injecting the mesh-like structure of the meat block with an additive solution containing 150 cc of mirin, 150 cc of Japanese rice wine, 15 grams of Amirich GCR as seasoning, 15 gram mixture of vitamin C and E, 360 grams of powdered sorbitol, vibration treatment was done for 5 minutes with an electric massage machine for an even distribution of the condiment and to promote the maturation process.

Next this processed beef roast was cut into slabs each 10 mm thick and 200 grams in weight, then wrapped and produced as a processed sample test food. Next meat of the same cut was quickly frozen, vacuum packed and produced as a processed frozen food: Next, meat of this cut was baked for 6 minutes on the front and back sides in an oven at 180°C, wrapped after refrigeration, and produced as a processed sample test food for eating after quick heating. This was also placed in an air-tight container, sealed and disinfected at high pressure and produced as a pouch-packed food.

The sample test foods of chilled, frozen, and frozen food for quick heating were each placed in refrigerators and freezers, and then taken out after two weeks of cold storage. After natural thawing (the pouch-packed food sample was left for 4 weeks at room temperature) whereupon sensory tests and outer appearance tests were performed.

### (Embodiment 10)

The block of frozen beef roast used as the meat was thawed in the defroster while controling the temperature at 2 to 5°C. The drip obtained from thawing was utilized in the alkali solution and salt-dissolving solution.

Food salt was dissolved in the drip fluid obtained from the thawed 9000 gram beef roast block to reach a salt fluid concentration of 4.3 mo1 in the 450 cc of fluid. This solution was then injected into the mesh-like structure of the meat block. The meat was then given vibration treatment for 5 minutes with an electric massage machine to promote the brining process.

Next, the 420 cc high alkali concentrate solution which had been dissolved with NaHCO₃ to reach a 2.0 mo1 concentration was injected into the mesh-like structure of the meat block, then vibration treatment was done for 5 minutes with an electric massage machine to promote the brining and gelling maturation process.

Next, after injecting the mesh-like structure of the meat block with an additive solution containing 150 cc of mirin, 150 cc of Japanese rice wine, 15 grams of Amirich GCR as seasoning, 15 gram mixture of vitamin C and E, 360 grams of powdered sorbitol, and vibration treatment was then done for 5 minutes with an electric massage machine for an even distribution of the condiment and to promote the maturation process.

This processed beef roast was then cut into slabs each 10 mm thick and 200 grams in weight, then wrapped and produced as a sample of processed food in chilled seasening. Next meat of the same cut was quickly frozen, vacuum packed and produced as a sample of processed food in frozen seasening.

Next, meat of this cut was cooked as a steak for 6 minutes on the front and back sides in an oven at 180°C, wrapped after refrigeration, and produced as a processed sample test food for eating after quick heating. This was also placed in an air-tight container, sealed and disinfected at high pressure and produced as a pouch-packed food.

The sample test foods of chilled, frozen, and frozen food for quick heating were each placed in refrigerators and freezers, then taken out after two weeks of cold storage and thawed naturally. The pouch-packed food sample was left for 4 weeks at room temperature. After that, sensory tests and outer appearance tests were performed

Examining the results of embodiments 9 and 10 shows that the disadvantages in the conventional frozen block of meat roast (loin), namely the emission of drip after freezing, the softening-weakening of the meat structure, emission of livestock and grass odors, rapid loss of meat color, hardening of the meat and unripened meat related to deterioration in the meat taste, can all be eliminated by this embodiment. In other words, by means of a biochemical reaction at the cellular level, the meat can be formed into a mesh-like structure, changing the quality of the meat on the cellular level to bring out the flavor of the meat, and further, condiments can be compounded in the meat to affect the flavor, making it possible to produce a meat of previously unknown flavor and deliciousness. This allows a processed meat to be obtained with seasonings added as needed for a multitude of applications. This processed meat can be distributed while chilled, or quick frozen and thawed after distribution to be used for many different purposes. Along with the fact that meat from other portions can be used as described above, saccharide and seasonings can be added as needed to bring out the flavor to a yet higher level. Another feature is that finer cutting of the different meat portions to match different needs, means that the following dishes can be produced.
(1) Steaks: Loin steaks, tenderloin steak, ham steak, cube steak, cut roast steak, tongue steak, roast beef, beef cutlets
(2) Fried meat: roasts, rib, loin, pig innards etc.,
(3) By using thin slice pieces: sukiyaki (pan fried), nabemono (pot cooked table dishes) shabushabu (thin meat slices in soysauce)
(4) Boiled dishes: beef curry rice, beef stew, meat and potatoes (boiled), basted vegetables

### (Embodiment 11)

Food salt was dissolved in the drip fluid to reach a salt fluid concentration of 4.3 mo1 in the 300 cc of fluid. This solution was then injected into the mesh-like structure of the 6,000 gram beef roast (round) block the meat block. The meat was then given vibration process for 5 minutes with an electric 'massage machine to promote the brining process.

Next, the 280 cc of high concentrated alkali solution into which NaHCO₃ had been dissolved to reach a 2.0 mo1 concentration, was injected into the mesh-like structure of the meat block, then vibration process was performed for 5 minutes with an electric massage machine to promote the brining and gelling maturation process.

Next, after injecting the mesh-like structure of the meat block with an additive solution containing 100 cc of mirin, 100 cc of Japanese rice wine, 10 grams mixture of vitamin C and E, 240 grams of sucrose, and 10 grams of aji-no-moto as seasoning, vibration process was then performed for 5 minutes with an electric massage machine to ensure an even mixture of the additive and to promote the brining and gelling maturation process.

### (Cooking Example 11-1)

The beef roast (round) block obtained in embodiment 11, was cut along the fiber into meat pieces 70 mm wide X 300 mm long X 70 mm thick and then cooked on each of the 4 sides for 1 minute at 160°C using a hot plate. Seasoning can be added to suit preferences. Next the meat was cooked in an oven for 60 minutes at 60°C to produce the roast beef. This was then refrigerated and packed as a cooked food item.

### (Cooking Example 11-2)

The beef roast (round) block obtained in embodiment 11, was cut into mini-steak pieces 8 mm thick, and 80 grams in weight. Next after quick freezing, it was vacuum packed, given a light, simple seasoning and produced as a frozen mini-steak.

After these various samples were left in a freezer for 4 weeks at -25°C, they were naturally thawed. Sensory and outer appearance tests were then performed.

As a result, the color was sharp with no drip coming out and the pieces were soft and swollen with good water retention, appearing to have good volume, being superior in comparison with conventional chilled meat.

### (Cooking Example 11-3)

The beef roast (round) block obtained in embodiment 11, was cut into squares 3 mm thick, and approx. 3 to 5 cm large, and placed in an air-tight bag with onions, shirataki (noodles from konnyaku flour) and fried eggs added, and marinade seasoned with sugar, soy sauce and condiments. High pressure, high heat disinfecting was then done and a pouch-packed sukiyaki donburi (pan-fried meat served over rice) food produced. This food was heated in boiled water for 5 minutes and served over warm rice and eaten. The meat shape was unchanged, the meat yield was good, retaining almost all of it's original size, yet tender and with a delicious flavor.

The conventional meat found in pouch-packed food is shrunken and losts its shape. An unresolved problem was the poor baking yield. The processing of this invention, however, resolves that problem, providing a pouch-packed food with a delicious taste. It was also found that the pouch-packed food of this embodiment besides sukiyaki donburi (pan-fried meat served over rice) can also be used with food items such as noodles, buckwheat noodles and as an ingredient in all dried instant food products.

### (Cooking Example 11-4)

The beef roast (round) block obtained in embodiment 11, was cut into squares 1 mm thick, and approx. 3 to 5 cm large, and freeze-dried. This was placed in container, sealed and stored for one month before opened. When placed in boiling water it swelled up to nearly its pre-dried size within a short time. When sensory tests were performed, it was found to be tender with a beef taste and delicious when eaten.

The dried meat in conventional dried instant foods does not resume properly to its original shape when placed in boiling water, and has a dry, rough sensation just as if eating thick paper with no meat taste nor improvement as demanded. The meat of this embodiment however has resolved these problems.

As clearly shown in the above cooking example, this embodiment restores chilled meat which has deteriorated in quality, eliminates the livestock and grass smell of the meat, restores moisture to the meat, makes the meat appear fresh and young looking, emulsifies the meat structure, gellifies it, and improves the quality of the mesh-like state so that drip is not emitted even when frozen. Also the embodiment softens hard meat and has numerous advantages involving the compounding of flavor constituents, by the adding seasoning to penetrate the meat, and further resolving the problems of conventional chilled meat, changing low grade meat such as loin into high grade meat. In addition, by adding functional agents such as EPA and calcium to the additive solution, a unique meat heretofore unknown can be produced. By forming this into the shape for the desired application such as steak, or fried meat, sukiyaki (pan fried), or boiled meat, it can be sold in a chilled state or else quickly frozen for distribution.

### (Embodiment 12)

Point end frozen beef stock was thawed while maintaining a -2C° temperature, thin sliced for canning and 6,000 grams prepared in a mixer. 300 cc of salt solvent with 4.3 mol concentration was sprayed into the meat while rotating the mixer at low speed. Until fluid content was sufficient to hasten the brining process.

Next, a 2800 cc of alkali solution into which NaHCO₃ was disssolved to reach a concentration of 2.0 mo1 was sprayed evenly onto the meat while rotating it in a mixer at low speed. After 5 minutes of this operation, the solution was adequately absorbed into the meat for hastening the brining and gelling maturation processes.

Next while rotating the mixer at low speed to knead the meat, an additive solution containing a mixture of 100 cc of cooking wine, 100 cc of brandy, 10 grams of aji-no-moto as seasoning, 240 grams of sucrose and 10 grams solution of vitamin C and E were sprayed onto the meat. After 5 minutes of this operation, the fluid was evenly dispersed into the meat, for hastening the brining and gelling maturation processes.

This processed meat was heated in a rotating cooker at 100°C for 5 minutes to denature the meat surface. The meat was then placed in cans in prescribed amounts and after adding flavoring solution, removing the air and sealing the can, heated at 115°C under 2 atmospheres of pressure for 40 minutes for sterilization to produce canned beef.

This was then opened and when sensory tests were performed, the meat was found to be soft and elastic, with high yield. Further the fat portions had not dissolved and the waxy components had not widened and coagulated. On attempting to eat the meat, it was found that the muscles and fat had gelled, with a good sensation in the mouth and an exceedingly fine taste.

The above shows that the meat of the embodiment is of exceedingly high quality as compared to conventional canned meat, with good water retention when swallowed, and is a product pleasant to bite and chew.

### (Embodiment 13)

6000 grams of imported frozen beef stock (point end brisket portion) of 6,000 grams was thawed while monitoring the temperature and then cut into cubes of approximately 25 mm, and placed in a mixer. Food salt was dissolved in to obtain 300 cc of high concentrated salt solution at 4.3 mo1 from beef thawing, to which was added 100 cc of mirin, a 10 gram solution of vitamins C and E, 240 grams of sorbitol powder, and 10 grams of Amirich GCR as seasoning while the mixer in rotating at low speed. This solution was sprayed onto the meat continually for 5 minutes to hasten the brining and gelling processes.

Next, a high concentrated alkali solution of 280cc dissolved with NaHCO₃ to reach a concentration of 2.0 mol, was mixed with 100 cc of Japanese rice wine and sprayed evenly onto the meat while rotating it in a mixer at low speed. After 10 minutes of this operation, the solution was adequately absorbed into fat layer and the meat for hastening the brining and gelling maturation processes as the mesh-like state.

This processed meat was heated in a rotating cooker at 100°C for 5 minutes to denature the meat surface. The meat was then cooled and placed a plastic heat-resistant container, filled with nitrogen gas and tightly sealed, heated at 115°C under 2 atmospheres of pressure for 25 minutes for sterilization, and treated under a microwave oven to produce a cooked food product.

### (Embodiment 14)

A block of frozen top side imported loin beef was thawed while monitoring the temperature. When the temperature at the center of the meat reached -2C° to -5C° the thawing was halted and the meat was minced with a 5 mm dia. chopper blade.

The meat of 6,000 grams prepared in this manner was placed in a mixer and food salt was dissolved in to obtain a 300 cc of high concentrated salt solution at 4.0 mo1. This solution was sprayed onto the meat while rotating the mixer at low speed. This spray operation was performed continuously for 2 minutes while operating the mixer, to hasten the brining process.

Next, an alkali solution of 280cc dissolved with NaHCO₃ into the drip to reach a concentration of 2.0 mo1, was sprayed onto the meat while rotating it in the mixer at low speed for 2 minutes of continuous operation to hasten the brining and gelling processes. Next, while rotating the mixer at low speed to knead the meat, an additive solution containing a mixture of 100 cc of mirin,10 grams of aji-no-moto as seasoning, 240 grams of sucrose, 100 cc of cooking wine and 10 grams solution of vitamin C and E solution were sprayed onto the meat. After 4 minutes of this operation, the fluid was evenly dispersed into the meat, for hastening the brining and gelling maturation processes.

### (Cooking Example 14-1)

The minced meat thus obtained in this embodiment was freeze-dried. This was placed in container, sealed and stored for one month then opened. When placed into boiling water it swelled up within a short time to nearly its pre-dried size. When eaten it was found to be tender and to have a beef taste.

The dried meat in conventional dried instant foods such as "Cup-A -Noodles" does not return properly to its original shape when placed into boiling water, and has virtually no meat taste, however the meat of this embodiment has been found to completely resolve these problems.

### (Cooking Example 14-2)

The meat of 500 grams obtained from this embodiment was mixed with 50 gram chunks of processed cheese cut into approximately 5 mm cubes. When this cheese-mixed ground steak was cooked, no weakening of meat bonding was found and this cheese-mixed ground steak had a fixed shape which did not deteriorate during cooking. The meat was also found to have a delicious taste with only salt and pepper as spices.

### (Cooking Example 14-3)

The meat.obtained from this embodiment was minced and a mabo tofu base stock (mabo bean paste without tofu) made. This was sealed in an air-tight container and disinfected under high heat and high pressure. After being processed in a mabo tofu pouch-packed food was stored for 15 days. The container was then opened and the cubes of cut tofu wrapped in polyvinyl, and this cooked in a microwave for 3 minutes to obtain a serving of cooked mabo tofu food. Sensory tests performed showed that the meat was tender to an extent not seen before, with a smooth sensation in the mouth, and that an instant mabo food item with a delicious taste had been produced.

### (Cooking Example 14-4)

The meat obtained from this embodiment was minced and ground steak, tsukune (ground fish/vegetable), hamburger, pouch-packed curry, and meat balls were produced. Each type of meat had good cohesiveness and did not crumble after cooking, allowing the meat to be formed in the shape needed.

Conventional type of hamburger are mixed with items such as eggs, egg whites and bread crumbs to improve cohesiveness, however the meat of this embodiment had fine cohesiveness and formability and did not require these additives.

The cooked ground steak was cut into cubes and sealed in air-tight bags with curry gravy. This was sterilized under high heat and high pressure to produce a pouch-packed curry. This showed that a pouch-packed curry food item the same as with embodiment 10 could be produced having meat with elasticity, good baking yield and no deterioration in shape. The flavor of conventional curry gravy was improved upon since the process yielded a composite of meat flavor and curry gravy flavor tasting as if cooked for a long time.

This ground meat was also used to produce mabo tofu, gyoza, (Chinese meat dumplings) and shumai (steamed minced meat delicacy). The meat resulting for each product was tender with thick sauce. Meat in conventional pouch-packed food products is hard with poor chewiness in the mouth but the meat of these cooking examples was elastic and tender with remarkably improved chewiness.

Ground meat can also be made from surplus meat by mincing with a chopper so that besides producing beef, ground pork, ground beef/pork mix and ground poultry meat can also be made by the above process, to obtain a ground meat of good cohesiveness, with excellent elasticity and flavor.

### (Embodiment 15)

Beef top side loin (frozen stock) of 6,000 grams was thawed while monitoring the temperature. When the temperature at the center of the meat block reached -2C° to -5C° the thawing was halted and the meat was cut into cubes of approximately 2 cm each. The pre-processed cube cut beef was placed in a vacuum mixer equipped with a spray unit and when decompressed to 600 mmHg, the valve was closed.

Food salt was dissolved in to obtain a 300 cc high concentrated salt solution at 4.0 mo1. This solution was sprayed onto the meat while rotating the above mentioned vacuum mixer/spray unit at low speed. The mixer was then returned to normal pressure and spray operation performed continuously for 4 minutes to hasten the brining process.

The vacuum mixer internal pressure was again decompressed to 600 mm Hg and the valve closed. A high concentrated alkali solution of 280cc dissolved with NaHCO₃ into the drip outflow obtained from the thawed meat to reach a concentration of 2.0 mo1, was sprayed onto the meat while rotating it in the mixer at low speed. The mixer was then returned to normal pressure and spray operation was performed continuously for 4 minutes to hasten the gell and brining processes.

Next, while rotating the mixer at low speed the vacuum mixer internal pressure was again decompressed to 600 mm Hg. An additive solution of 100cc of mirin, 100 cc of Japanese rice wine, a 10 gram mixture of vitamins C and E, 120 grams of sorbitol powder, and 10 grams of Amirich seasoning GCR was sprayed onto the meat, and then the pressure was return to normal pressure, the meat rotated in the mixer at low speed continually for 4 minutes for an even distribution of additive seasoning content and complete development of the brining and gelling processes.

It was found that the drip with the alkali dissolved in it, can be adequately utilized with the same types of meat or differing types of meat.

The vacuum mixer was used to decompress the various meat types for spraying on the high concentrated salt solution, high concentrated alkali solution, and additive solution, and then restoring normal pressure to ensure an even distribution of the solutions in the meat. However by somewhat lengthening the low speed rotation to assure an adequate kneading and mixing of meat, the decompression step can be omitted since the solution will be thoroughly impregnated into the meat regardless.

The meat of this embodiment was prepared for beef curry and its flavor penetrated into the meat in a short time during cooking. This had the same flavor as conventional curry cooked over along period of time. The meat of this embodiment was sealed along with the curry gravy into an air-tight container and sterilized under high pressure and high heat to produce the pouch-packed food whose meat was found to retain its form with no dissolution of the fatty portions, the flavor of the meat brought out in the curry gravy and a the curry gravy itself had a delicious flavor. The meat in conventional curry from pouch-packed food crumbles into separate fragments during high heat, high pressure sterilization or sterilization by microwave heating and an outflow occurs from the fatty portions. However in this embodiment these problems have been resolved so that a beef curry with tender and elastic meat can be provided. This can also be utilized among others, in beef stew and Chinese cuisine.

### (Embodiment 16)

After injecting a 300 cc high concentrated salt solution consisting of a mix of food salt and MgCl₂ in a ratio of 95 to 5 to reach a concentration of 4.3 mo1 into the mesh-like portions of a 6,000 grams block of chilled pork loin used as the meat, it was vibration treated by an electric massage machine for 5 minutes to hasten the brining process.

Next, after injecting into the mesh-like portions of the meat block with a high concentrated alkali solution of 280 cc NaHCO₃ dissolved in water to reach a concentration of 2.0 mo1, the meat was vibration treated by an electric massage machine for 5 minutes to hasten the brining and gelling processes.

Afterwards then injecting the mesh-like portions of the meat block with an additive solution containing a 10 gram mixture of vitamin C and E, 240 grams of sucrose, 100 cc of cooking wine, 100 cc of Japanese rice wine, and 10 grams of aji-no-moto, a vibration treatment was then performed for 5 minutes with an electric massage machine to disperse these solutions in the fatty portions of the meat, promote the gelling maturation process, and obtain a processed, additive-enhanced loin (roast) meat.

This pork meat was further cut into pieces each 10 mm thick and approximately 200 grams in weight. These were quickly frozen and vacuum-packed to produce a processed, frozen flavored food which can be distributed and sold as pork steak, for port cutlets and utilized in a variety of other applications.

### (Cooking Example 16-1)

The pork steak meat obtained in this embodiment was cooked on the front and back sides for 5 minutes at 180°C, then refrigerated, wrapped and seasoned to produce a cooked pork steak food product.

### (Cooking Example 16-2)

The pork loin, pork steak cut meat obtained in this embodiment was sealed in an air-tight container and sterilized under high heat and high pressure to produce a pouch-packed food.

### (Cooking Example 16-3)

The pork loin (roast) cut meat obtained in this embodiment was lightly sprinkled with flour and next dipped in beaten egg and put in bread crumbs, quickly frozen and wrapped to produce a seasoned, frozen meat for pork cutlets. This was next fried in oil on the top and bottom sides for 4 minutes at 170°C to produce a cooked, seasoned food.

Since conventional pork cutlet meat shrinks as the batter coating stretches when placed in the cooking oil, the batter coating and the meat separate when the cutlet is cut with a knife. However since the meat of this embodiment expands, the batter coating seals the meat well allowing a pork cutlet to be produced without deteriorate even when cut with a knife. In the sensory tests the meat had fine tenderness and elasticity, the fatty portions'had gelatinized in meat with a delicious taste not known up until now. The same results were also obtained with shishkebab type pork meat.

### (Embodiment 17)

A 760 gram portion of frozen pork shoulder (roast) was thawed until reaching a temperature of 2°C to 5°C in a defroster while monitoring the temperature.

After injecting the mesh-like portions of the pre-processed meat block with a 38 cc high concentrated salt solution consisting of salt having a concentration of 4.3 mo1, and an additive solution of 12.5 cc of mirin, a 1.3 gram mix of vitamins C and E, 30.0 grams of sorbitol powder, and 1.3 grams of Amirich seasoning GCR, it was vibration treated by an electric massage machine for 5 minutes to hasten the brining process.

Next, after injecting the mesh-like portions of the meat block, with a high concentrated alkali solution of 35 cc into which NaHCO₃ was dissolved to obtain a concentration of 2.5 mo1, and mixed with 12.5 cc of Japanese rice wine added as an alcohol, vibration treatment was performed for 10 minutes with an electric massage machine to complete the gelling maturation process, and obtain a processed, shoulder roast loin meat.

The above meat was prepared in the same manner as embodiment 16 and sensory and outer appearance tests performed. The same results as for embodiment 16 were obtained. A vivid color change was effected for the chilled pork shoulder (roast) product and a remarkable improvement in product quality obtained.

### (Embodiment 18)

A 6,000 grams block of pork loin (roast) was prepared as the meat, and after injecting the mesh-like portion of the above meat with a solution in which food salt was dissolved to obtain a 300 cc high concentrated salt solution of 4.3 mo1, the meat was vibration treated by an electric massage machine for 5 minutes to hasten the brining process.

Next, after injecting the mesh-like portions of the meat block, with a solution in which NaHCO₃ was dissolved to obtain a 280 cc high concentrated alkali solution of 2.0 mo1, vibration treatment was performed for 5 minutes with an electric massage machine to hasten the gelling and brining maturation processes.

Afterwards, an additive solution consisting of 100 cc of mirin, 100 cc of Japanese rice wine, 240 grams of sucrose, 10 grams of aji-no-moto as seasoning and a 10 gram mixture of vitamins C and E, was injected into the mesh-like material of the meat block. Then vibration treatment was performed for 5 minutes with an electric massage machine to disperse these solutions in the fatty portions of the meat, promote the gelling maturation process, and obtain a seasoned processed meat.

The processed meat obtained in this embodiment was formed into a round ham shape and heated for 180 minutes on an electric hot plate controlling temperature from 5 to 57°C, and then refrigerated with the meat produced in a raw ham state. Sensory and outer appearance tests performed showed the meat fresh and juicy, with vivid color and good water retention. The meat was also found to be elastic with rich flavor and superior texture.

However, the low heating method applied in this embodiment to produce raw ham can also be used to produce smoke ham.

Conventionally processed ham has problems with the cohesiveness of the meat. To compensate cohesive agents are added to starch and egg whites in large quantities and the product is then generally encased and bound with thread. However since the raw ham of this embodiment has strong cohesiveness, harmful additives or chemicals are totally unnecessary, and the ham shape can be maintained without use of a casing to produce a raw ham shape ham roast of 100% pork meat. Further, the conventional ham process calls for pickling the meat for 5 to 10 day interval and 1 to 2 days are needed for jobs such as massage of the meat to mature it after injection of the pickling fluid, so that an extremely long time is required and the job process is not productive. However the job process of this embodiment is extremely short, from the processing start with the meat in block shape, until the completion of the meat in a raw ham shape requiring only several hours. The process is easy to perform, productive, and excellent for low-cost, mass production of meat in large quantities.

The shoulder roast block of pork in this embodiment can be used as is, or can be cut as required and refrigerated for sale: It may also be quickly frozen, distributed and later thawed for sale.

### (Embodiment 19) (Not according to the invention)

A roast chilled pork block of 3,000 grams was prepared and salt dissolved in to obtain 150 cc of high concentrated salt solution at 4.3 mo1, to which was added 120 grams of sucrose, 15 grams of Pork Powder-S (made by Taiyo Kagaku), and a 2 gram mixture solution of vitamins C and E. This solution was injected into the mesh-like material of the meat and vibration treatment done continually for 5 minutes with a massage machine to hasten the brining process.

Next, a high concentrated alkali solution of 140 cc into which sodium pyrophosphate was dissolved to reach a concentration of 2.0 mo1, was added with 21 grams of egg white powder, 6 grams of aji-no-moto as seasoning, 1 gram of Amirich seasoning GCR, and a mixed additive solution consisting of 6 grams of Super-Lact No.96 (made by Taiyo Kagaku), 1.5 grams of Sunpro-GF-G1.1 (made by Taiyo Kagaku), 15 grams of Sunlite S-3 (made by Taiyo Kagaku), and 2.1 grams of spices. This mixed solution was injected into the mesh-like material of the meat, then placed in vacuum massage operated for 30 minutes to hasten the brining and gell processes and also to ensure equalized distribution of the above solution in the meat to hasten maturation processes.

The above meat block whose processing is finished, was shaped into round meat clumps in a fibrous casing and compressed by hand to join them at the ends. When this rolling up was finished, the meat block was dried at 35 to 45°C for 30 minutes on the top side, then promptly smoked for 60 minutes in cherry tree chips. Next the meat was boiled in water heated to 75°C for 4 hours then immediately immersed in cold water to obtain the ham roast.

This embodiment was achieved in a highly productive process requiring only a short time, meat quality is soft on account of the strong gell maturation with good elasticity. In addition, nitrites are not required at all, but vitamin injection brings out the color of superior quality in a ham roast. The amount of pickling fluid needed is reduced and besides raising the product yield to about the 97% level the flavor of the meat is brought out and the fatty portions are especially soft.

Conventional ham has the problem that starch dissolvers and egg white powders tend to cause the essential flavor of the meat to be lost according to the amounts used. Also the vivid color of the meat gradually grows weaker so harmful coloring agents such as nitrites must be added which reduces product safety. Further problems are that the pickling operation takes a long time, meat quality is not soft and the delicious taste of the meat is lost due to nitrites etc. This embodiment however, was able to resolve these problems.

### (Embodiment 20) (Not according to the invention)

A frozen block of pork loin meat was thawed while monitoring the temperature and made into ground minced meat using a 5 dia. chopper blade. The minced meat of 3,000 grams was placed in a mixer and food salt was dissolved in to obtain a 150 cc high concentrated salt solution at 4.3 mol. This was added with a solution comprising 120 grams of sucrose, 5 grams of aji-no-moto as seasoning, and a 5 gram mixture solution of vitamins C and E. This solution was sprayed onto the meat while rotating the mixer at low speed and continued for 5 minutes to hasten the brining process.

Next, an alkali solution of 140 cc into which potassium pyrophosphate was dissolved to reach a concentration of 2.0 mo1, was added with 50 cc of mirin, 1 gram of white pepper and 2 grams of black pepper as spices, 1 gram of Cardamon, 2 grams of nutmeg, and 1 gram of garlic. This mixed solution was sprayed onto the meat, then placed in mixer and operated continuously for 15 minutes to promote the brining and gell processes and also to ensure equalized distribution of the flavor additives.

When the above processing was complete, the minced meat was filled into a stuffer in zigzag fashion and the meat given a twist every 6 to 8 cm to make a chain shape. This was placed in a smokehouse at 35 to 40°C and dried for 30 minutes, and afterwards smoked at 40 to 45°C with cherry tree chips for 30 minutes. Next it was boiled for 20 minutes in water adjusted to 75°C, and refrigerated in cold water to obtain a ground wiener sausage.

The ground wiener sausage of this embodiment was filled only with the minced meat obtained from the embodiment. The meat had extremely good cohesiveness and good chewing sensation in the mouth even though the meat cut by silent cutter was not mixed. Further the cut cross section of meat had a vivid color and the well-adjusted spice mixture provided a ground wiener sausage meat of fine aroma.

### (Embodiment 21)

A 3,000 gram block of fatty chilled pork meat was prepared. A solution added with food salt to obtain a 150 cc salt solution of 4.3 mo1 concentration, into which 50 cc of mirin, a 5 gram mixture of vitamin E and vitamin C solution, 120 grams of sucrose, 5 grams of Amirich GCR as seasoning, and 3 grams of spices were dissolved to obtain a mixed additive solution. This solution was injected into the mesh-like material of the above mentioned meat. Afterwards vibration process was performed for 5 minutes with an electric massage machine to promote the brining process and ensure an equal distribution of the solution in the meat.

Next, NaHCO₃ was dissolved into a 140 cc alkali solution to obtain a 2.0 mo1 concentration. This was mixed with 50 cc of cooking wine, and injected into the mesh-like material of the meat, and performed a vacuum massage operation for 30 minutes to hasten the brining and gelling processes, and ensure an equal distribution of solution in the meat.

The above processed block of fatty chilled pork meat was placed in a smokehouse at 35 to 40°C and dried for 3 hours, and afterwards smoked at 25 to 30°C with cherry tree chips. After 3 days in the smokehouse the smoked bacon meat product was obtained.

In the conventional process for producing bacon, in spite of the fact that 8 to 10 days are required for blood drainage and pickling, the salt portions are difficult to distribute evenly over the entire meat piece because of the fatty and muscle layers and meat preservability is also a problem.

The bacon of the present embodiment however requires only about 50 minutes of pre-processing and since the gelling and emulsifying of fatty layers proceeds well the additive solution is well distributed throughout, and the preservability is excellent. Process productivity is good with no harmful items such as nitrates being used. The vitamin solution brings out the color of the meat well, the meat is tender with a rich and delicious texture and an eating sensation not experienced previously.

### (Embodiment 22)

A 3,000 gram block of chilled pork meat was prepared. A solution added with food salt to obtain a 150 cc salt solution of 4.3 mol concentration, into which 50 cc of Japanese rice wine, 120 grams of sucrose, were dissolved to obtain a mixed additive solution. This additive solution was injected into the mesh-like material of the above mentioned meat. Afterwards vibration treatment was performed for 5 minutes with an electric massage machine to promote the brining process.

Next, NaHCO₃ was dissolved to obtain a 140 cc alkali solution of 2.0 mo1 concentration. This was mixed with a 5 gram solution of vitamin C and E, 5 grams of Amirich GCR as seasoning, 50 cc of mirin and 3 grams of spices and injected into the mesh-like material of the meat. Next the meat was placed in a vacuum massager for 30 minutes of operation to hasten the brining and gelling processes and ensure an equal distribution of solution in the meat.

The above meat block whose processing was finished, was shaped into round meat clumps in a fibrous casing while compressed by hand to join them at the ends. When this rolling up was finished the roast meat was dried at 35 to 45°C for 30 minutes on the top in a heating chamber, then promptly smoked for 60 minutes in smoke from cherry tree chips. Next the meat was boiled in water heated to 75°C for 4 hours, then immediately immersed in cold water and refrigerated to obtain the ham roast. This ham roast was produced from 100% pork meat using no chemicals, starch compounds or egg whites as cohesive agents.

Conventional ham has the problem that addition of starch dissolvers and egg white powders, according to the amounts used, tend to loose the essential flavor of the meat. Also the vivid color of the meat gradually grows weaker so harmful coloring agents such as nitrites must be added which reduces product safety and the delicious taste of the meat is also lost.

The ham roast produced in this embodiment however, without the addition of large amounts of salt additives in the process, it uses 100% pork meat and has healthy ingredients, contains no harmful chemicals such as nitrates, is extremely safe and can mass produce delicious tasting ham roasts in a highly productive process.

### (Embodiment 23)

A block of frozen pork shoulder (roast) was thawed while monitoring the temperature and the meat was minced by a 5 mm dia. chopper blade. The minced meat of 6,000 grams prepared in this manner was placed in a mixer and an alkali solution of 300 cc dissolved with NaHCO₃ to reach a concentration of 2.0 mo1, was added with a solution consisting of 100 cc of cooking wine. This additive solution was sprayed onto the meat while rotating at low speed in the mixer. After 5 minutes of continuous operation, the muscle fibers had become slack, and promotion of the the brining and gelling maturation processes was done.

Next, salt was dissolved in to obtain a salt concentrate solution of 4.0 mo1, into which was dispersed 100 cc of mirin, 240 grams of sucrose, a 10 gram solution of vitamins C and E, 10 grams of Amirich GCR as seasoning, and 18 grams of spices. This solution was sprayed onto the meat while rotating the mixer at low speed. This operation was performed continuously for 15 minutes, to hasten the brining and gelling processes and ensure the dispersion of additive solution in the meat.

When the above process was finished 1,000 grams of minced meat was placed in a cutter/mixer, immediately added with fine pulverized ice and operated in the machine for 30 seconds. This meat was mixed with 550 grams of the above ground minced meat and fed into the stuffer to make ingredients for wiener sausages, frankfurter sausages and also bolognese sausages

These were placed in a smokehouse at 35 to 40°C for 30 minutes for drying their surfaces, and then they were smoked in cherry tree chips for 30 minutes at 40 to 45°C. Then after boiling the wiener sausages in 75°C water for 20 minutes, the frankfurter sausages for 30 minutes and the bolognese sausages for 40 minutes, they were refrigerated in water and production of the various types of sausages was complete.

The various sausages produced in this embodiment had good cohesiveness and were overall tender, yet had a good chewy sensation. The color on the cross sections was vivid and each type sausage had excellent taste and texture. It was also found that Rionaso sausages could be produced by mixing in cheese and vegetables with this processed meat.

### (Embodiment 24)

A 3,000 gram block of fatty chilled pork meat was prepared. A solution added with salt to obtain a 150 cc salt solution of 4.3 mo1 concentration, into which 50 cc of Japanese rice wine, a 5 gram mixture of vitamin E and vitamin C solution, 60 grams of sucrose, 5 grams of aji-no-moto as seasoning, and 5 grams of spices were dissolved to obtain a mixed additive solution. This solution was injected into the mesh-like material of the above mentioned meat. Afterwards vibration treatment was performed for 5 minutes with an electric massage machine to promote the brining process and ensure an equal distribution of solution in the meat.

Next, NaHCO₃ was dissolved to obtain a 140 cc alkali solution of 2.0 mo1 concentration. This was mixed with 50 cc of mirin and 60 grams of sorbitol powder and then injected into the mesh-like material of the meat. Next, vacuum massage operation was performed for 30 minutes to hasten the brining and gelling processes and ensure an equal distribution of solution in the meat. Next the meat was placed in a freezer at 5°C for 3 days to ripen naturally, after which it was cut into two pieces of meat each approximately 5 cm square and approximately 25 cm long. After one piece was steamed for 15 minutes, it was boiled in water for one hour and seasoning added to obtain boiled pork. The other piece was steeped in flavor enhancer for 30 minutes, and cooked in an oven at 150°C for 30 minutes to obtain roast pork.

Conventional boiled pork and roast pork require a long time to produce. More specifically, boiling requires 5 to 6 hours, and the roast pork must be steeped in pickling fluid for 2 to 3 hours. However the meat of this embodiment becomes tender in a short time and pre-processing, and keeps its flavor. The adding of condiments adjusts the different flavors well and the meat can be produced in a short time to produce delicious boiled and roast pork products.

### (Embodiment 25)

Frozen poultry thigh meat of 1200 grams was thawed while monitoring the temperature. Salt was dissolved in to obtain a 60 cc salt concentrate solution at 4.3 mo1, into which was added 20 cc of mirin, a 2 gram solution of vitamins C and E, 4.8 grams of sorbitol powder, and 2 grams of Amirich GCR as seasoning. This solution was injected into the mesh-like material of the poultry thigh meat and vibration treatment performed continually for 5 minutes with an electric massage machine to hasten the brining process.

Next, a 56 cc alkali solution dissolved with NaHCO₃ to reach a concentration of 2.5 mo1, was mixed with 20 cc of Japanese rice wine and injected into the mesh-like material of the poultry thigh meat. After 10 minutes of vibration with an electric massage machine, the solution was adequately absorbed into the meat for hastening the brining and gelling maturation processes.

### (Cooking Example 25-1)

The poultry thigh meat obtained from this embodiment was cooked for 13 minutes on the top and bottom sides at 170°C and then refrigerated and wrapped to produce the cooked sample. Spice can be added as needed to match customer preferences.

### (Cooking Example 25-2)

Poultry thigh meat of 200 grams obtained from this embodiment was quickly frozen and then vacuum wrapped to produce a frozen seasoned poultry thigh meat product. Sensory tests and outer appearance tests were performed using the test material obtained from this cooking sample. Results showed the thigh poultry meat of this embodiment could be sold as chilled or could be quick-frozen, shipped to distributors and then sold after thawing. It could also be vacuum-wrapped while frozen and sold as frozen meat. The meat of this example was cooked as poultry steak which had an extremely delicious flavor when eaten. Conventional chicken meat has a dry, crumbly sensation, must be boiled for a long time or pickled in vinegar or sauce and then cooked or fried. This cooking example however had a delicious taste even without pickling or basting in sauce. Further, when cooked as a steak it showed no shrinkage but rather appeared to have increased in thickness, with an extremely high baking yield, and also produced the poultry steak and deep fried chicken tender enough to be eaten even by the elderly. The poultry meat further had retained its freshness, and had remarkably improved quality seen as due to such factors as a drop in the pH even after 10 days had elapsed since cooking. As the result, this meat could be utilized for cooking as poultry steak, chicken teriyaki, fried chicken, pan-cooked chicken, pot-cooked chicken with vegetables (mizutake) and Chinese cuisine with basted vegetables.

### (Embodiment 26)

A block of chilled chicken breast meat stock was prepared in 10 pieces at 300 grams each. A 140 cc of high concentrated alkali solution dissolved with NaHCO₃ to reach a concentration of 2.0 mo1 was injected into the mesh-like material of the meat block. After 5 minutes of vibration with an electric massage machine, the solution was adequately absorbed into the meat for hastening the gelling process.

Next, food salt was dissolved in to obtain a 150 cc of high concentrated salt solution at 4.3 mo1. This solution was injected into the mesh-like material of the meat and vibration treatment performed continually for 5 minutes with an electric massage machine to hasten the brining and gelling processes.

Then, a solution into which was dissolved 50 cc of mirin, 50 cc of Japanese rice wine, 5 grams of aji-no-moto as seasoning, and a 5 gram mixed solution of vitamins C and E, was injected equally into the mesh-like material of the meat block. Vibration treatment was then performed continually for 5 minutes with an electric massage machine to assure an even distribution of seasoning additive into the meat and to complete development of the maturation processes.

Sensory and outer appearance tests were performed on this embodiment which showed largely the same results as embodiment 25. Moreover the poultry meat further had retained its freshness, and had remarkably improved quality seen as due to factors such as the drop in pH even after 10 days had elapsed since cooking.

The above processed chicken meat can be sold as chilled, or quick-frozen and distributed for sale later after thawing. The chicken meat can also be vaccum-wrapped while frozen and sold as frozen meat.

### (Cooking Example 26-1)

The chicken breast meat obtained from the sample and weighing 250 grams was preheated on the top and bottom sides at 180°C for 3 minutes each until browned, then refrigerated and sealed in an air-tight container. Next it was sterilized under high heat and high pressure of 2kg/cm² at 115°C for 35 minutes to produce a pouch-packed food product.

### (Cooking Example 26-2)

The meat obtained from embodiment 26 was cut into cubes of approximately 2 cm and sealed in an air-tight container along with gravy added with onions, carrots, fried eggs and seasoned with sugar, soy sauce and condiments and then sterilized under high heat and high pressure to produce pouch-packed oyako-don (egg topping for rice). When this test food was boiled for 5 minutes and poured atop rice as a topping, virtually no deterioration in the meat shape was found and the meat had retained its size. The baking yield was also found to be high. Results of the sensory tests showed the meat was tender and fine texture and an excellent taste.

### (Embodiment 27) (Not according to the invention)

Frozen imported mutton of 3,000 grams was thawed while monitoring the temperature. Salt was dissolved in to obtain a 150 cc salt concentrate solution of 5.0 mo1, into which was added 50 cc of mirin, 5 grams of Amirich GCR, 60 grams of sorbitol powder and a 5 gram mixture of vitamin C and E solution. This additive solution was injected into the mesh-like material of the mutton meat and vibration performed for 5 minutes with an electric massage machine to hasten the brining process and ensure impregnation of the additive solution into the meat.

Next, polyphosphoric soda was dissolved to obtain a 140 cc high concentrated alkali solution of 2.0 mo1 concentration, into which 50 cc of Japanese rice wine was mixed as alcohol. This additive solution was then injected into the mesh-like material of the mutton meat and vibration performed for 10 minutes with an electrical massage machine to hasten the brining and gelling maturation processes.

### (Cooking Example 27-1)

The mutton meat obtained from embodiment 27 was cut into slices each 10 mm thick and approximately 150 grams in weight which were then cooked on the top and bottom for 8 minutes at 180°C, then vacuum-packed after refrigeration to produce a cooked food item of a steak shape.

### (Cooking Example 27-2)

The cooked mutton meat obtained from embodiment 27 was finely cut and vacuum-packed in chunks of 500 grams each. These were quick-frozen to produce a flavored, frozen cooked mutton meat food product not requiring condiments.

### (Cooking Example 27-3)

The cooked mutton meat obtained from embodiment 27 was finely cut, sealed in a pouch-pack and then sterilized under high heat and high pressure of 2kg/cm² at 115°C for 40 minutes to produce a pouch-packed food product. Mutton generally has a mixture of muscle and fatty portions in the meat and the collagen content is in particular high, so that the meat quality is hard. Use of this embodiment allowed the meat quality to loosen in a short time and along with becoming soft, muscle and fatty portions had gelatinized at the maturation of the gelling process, and the meat had a good eating sensation in the mouth with increased flavor. Further, the mutton and grass odors had been eliminated and waxy portions thought to have dispersed within, the meat did not ooze from the surface of the meat when heated, and the meat found to possess many superior features.

### (Embodiment 28)

Imported frozen horse meat of 3,000 grams was thawed while monitoring the temperature. Salt was dissolved to obtain a 150 cc salt concentrate solution of 5.0 mo1, into which was added 50 cc of mirin, 5.0 grams of Amirich GCR seasoning, 60 grams of sorbitol powder and 5.0 grams of vitamin C and E solution. This additive solution was injected into the mesh-like material of the horse meat and vibration performed for 5 minutes with an electrical massage machine to hasten the brining process and ensure impregnation of the additive solution into the meat.

Next, NaHCO₃ was dissolved to obtain a 140 cc alkali concentrate solution of 2.0 mo1 concentration, into which 50 cc of Japanese rice wine was added. This additive solution was then injected into the mesh-like material of the above mentioned horse meat and vibration performed for 10 minutes with an electrical massage machine to hasten the brining and gelling maturation processes.

Horse meat generally has problems in that the color tends to drop and the drip rate is high. Large amount of drip especially tend to appear when the frozen horse meat is thawed. The horse meat of this embodiment however was restored to a vivid color and the emission of drip declined remarkably also having increased flavor and excellent texture. Though this was frozen stock, the meat quality was restored to that of chilled meat. When prepared as basashi (raw horse meat dish), the flavor and texture were found to be excellent.

### (Cooking Example 28-1)

The horse meat obtained from embodiment 28 was cut into short slabs and stuffed in pieces of 100 grams each, into bags and sealed. These were then quick-frozen to produce a finely cut, flavored horse meat frozen food product for basted vegetables.

### (Cooking Example 28-2)

The horse meat obtained from embodiment 28 was cut to form portions. These were quickly frozen and vacuum-packed to produce steak slices.

### APPLICATIONS IN INDUSTRY

This invention, comprising the above can therefore provide the following superior results.
(1) A processed meat of this invention characterized by;
   a. a large baking yield and good swelling (expansion) rate so that when cooked as a roast or processed hamburger, a product with a good outer appearance and cost reduction can be produced.
   b. superior elasticity, and improved flavor can be obtained even if the meat is baked, steamed or boiled.
   c. completely new types of processed meat can be produced by mixtures of condiments and meat extracts.
   d. resistant to deterioration from freezing or cold storage, has excellent preservability and further is a processed meat of high quality, rich in flavor constituents, and low molecular weight nutrients with no outflow from the drip.
   e. the base cost of the processed food product can be greatly reduced since there is a remarkable improvement in the baking yield of the cooked meat.
   f. a processed meat that can be made to match the application by impregnating the meat with various condiments and nutrient solutions.
   g. providing the meat with added value by providing a luster and gloss to meat clumps to which fresh color has weakened, and restores the color to the meat.
   h. hastening the maturation of the meat clumps thawing after having been frozen, or right after the animal is butchered.
   i. with an extremely small proportion of additives and a drastic reduction in use of chemicals such as preservatives, an exceedingly healthy and safty processed meat can be produced.
(2) Meat material of this invention which;
   a. can be quickly and easily utilized as a simple processed meat for cooking since a thin application of salt seasoning was added beforehand to the fatty and meat portions of various shapes and types of meat and meat blocks for different applications.
   b. is an easy to use flavored food meat with an excellent taste and no drip even during thawing, since seasoning containing saccharide was present beforehand in the fatty and meat portions, and it is suitable for different applications for all types of meat shapes and meat blocks.
   c. is an easy to eat food product for the elderly, hospital patients and infants, also having excellent nutritive value since the above mentioned processed meat and cooked meat has been impregnated with auxiliary materials such as functional agents, animal and vegetable fibers, animal and vegetable oils, and spices to match the food application.
   d. distributed as a frozen food product, chilled food product or refrigerated food product of a, b, and c above, with minimal deterioration in food quality and excellent qualities for distribution as a meat product, since it has good preservability with no drip outflow, fine elasticity and extremely slight discoloration.
   e. can be used as a pre-cooked food product or food material for Japanese, western, or Chinese cuisine, canned, pouch-packed, and microwave cooked food by preparing and cooking according to the objectives for the above a, b, and c.
   f. is usable as an instant food product of high quality, excellent for freeze-dried processing since the meat has high cohesiveness and since the additive fluid is dissolved with various additive solutions to maintain uniform quality within the meat.
(3) Production method for processed meat which;
   a. allows adjusting the meat quality hard or soft as needed by selecting the appropriate injection amount of salt solution and alkali solution and selecting the appropriate processing time for vibration treatment etc.
   b. changes hard, low grade meat such as loin meat into soft, high quality meat rich in meat juices.
   c. can produce meat at a low base price as a processed food of high quality with remarkably improvement in baking yield and expansion (swelling) rate.
   d. has remarkably improved preservability and prevents drip outflow since the cell membranes, myofibril and perimysium in the meat clump have dissolved and formed fine, mesh-like structures and gellification is performed.
   e. produces meat in a highly productive manner and extremely high baking yield imparting added quality to the meat by means of adding condiments and nutrient solutions in the high concentrated salt solution and high concentrated alkali solution.
   f. adds improved resistancy to oxidation in the meat along with remarkably improved luster, gloss and coloration, resulting from use of vitamin C and vitamin E solution in the high concentrated salt solution or the high concentrated alkali solution used as additives in the meat.
   g. produces a meat of good elasticity resulting from mixing alcohol with the additive fluid in the meat.
   h. gives additional value to the meat, imparting a superior luster and gloss to meat which color has weakened, and providing a coloration resembling that of fresh meat.
   i. provides early maturation of freshly butchered meat and frozen meat that has been thawed.
   j. produces an exceedingly healthy and safty processed meat with an exceedingly small proportion of additives and a drastic reduction in use of chemicals such as preservatives.

**Table 1**

| Additive amounts (Per Australian beef of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Experimental example 1 | 24 | 3 | 2 | 0 | 0 | 0 | 0 |
| Experimental example 2 | 24 | 3 | 2 | 5 | 0 | 0 | 0 |
| Experimental example 3 | 24 | 3 | 2 | 5 | 167 | 25 | 0 |
| Experimental example 4 | 24 | 3 | 2 | 5 | 167 | 25 | 7 |
| Experimental example 5 | 24 | 3 | 2 | 5 | 167 | 25 | 15 |
| Experimental example 6 | 0 | 3 | 2 | 0 | 0 | 0 | 0 |
| Experimental example 7 | 0 | 3 | 2 | 5 | 0 | 0 | 0 |
| Experimental example 8 | 0 | 3 | 2 | 5 | 167 | 25 | 0 |
| Experimental example 9 | 0 | 3 | 2 | 5 | 167 | 25 | 7 |
| Experimental example 10 | 0 | 3 | 2 | 5 | 167 | 25 | 7 |
| Experimental example 11 | 24 | 3 | 0.5 | 0 | 0 | 0 | 0 |
| Experimental example 12 | 24 | 3 | 4 | 0 | 0 | 0 | 0 |
| Experimental example 13 | 24 | 0.5 | 2 | 0 | 0 | 0 | 0 |
| Experimental example 14 | 24 | 5 | 2 | 0 | 0 | 0 | 0 |

**Table 2**

| MEAT PROCESSING EVALUATION (Australian beef) | | | | | | |
|---|---|---|---|---|---|---|
| | ADDITIVE SOLUTION ABSORPTION RATE (%) | pH | OUTER APPEARANCE (10 pt. evaluation) | | | FACTS DESERVING SPECIAL MENTION |
| | | | COLORANT | SHINE | ELASTICITY | |
| Experimental example 1 | 98.4 | 7.0 | 8.2 | 8.4 | 8.1 | Luster and gloss are satisfactory. |
| Experimental example 2 | 98.5 | 7.1 | 8.3 | 8.4 | 8.5 | Luster and gloss are satisfactory. |
| Experimental example 3 | 100 | 7.1 | 8.3 | 8.5 | 8.6 | Luster and gloss are satisfactory. Effect of vitamins E and C can be seen in coloration. |
| Experimental example 4 | 100 | 7.0 | 8.4 | 8.5 | 8.7 | Luster and gloss are satisfactory. Gloss is now satisfactory due to large sugar content insertion. |
| Experimental example 5 | 100 | 7.1 | 8.5 | 8.5 | 8.7 | Luster and gloss are satisfactory. No deterioration from freezing. Elasticity is present. |
| Experimental example 6 | 98.5 | 7.1 | 8.4 | 8.2 | 7.9 | Luster and gloss are satisfactory. |
| Experimental example 7 | 98.5 | 7.2 | 8.3 | 8.3 | 8.0 | Luster and gloss are satisfactory. |
| Experimental example 8 | 98.8 | 7.1 | 8.4 | 8.4 | 8.6 | Luster and gloss are satisfactory. |
| Experimental example 9 | 98.5 | 7.1 | 8.5 | 8.4 | 8.7 | Luster and gloss are satisfactory. |
| Experimental example 10 | 98.5 | 7.1 | 8.5 | 8.5 | 8.7 | Luster and gloss are satisfactory. |
| Experimental example 11 | 85.3 | 6.1 | 6.8 | 7.2 | 7.1 | Elasticity, luster and gloss appear to have deteriorated somewhat. |
| Experimental example 12 | 100 | 7.1 | 8.3 | 8.5 | 8.9 | Luster and gloss are satisfactory. Elasticity is present. |
| Experimental example 13 | 95.5 | 8.0 | 8.2 | 7.9 | 8.0 | Luster and gloss have deteriorated somewhat. |
| Experimental example 14 | 100 | 7.3 | 8.1 | 8.9 | 9.1 | Luster and gloss are normal. |

**Table 3**

| PRODUCT EVALUATION(1) (Australian beef) | | | | | | |
|---|---|---|---|---|---|---|
| | BAKING YIELD (%) | EXPANSION (%) | SENSATION TEST | | FOLD TEST | FACTS DESERVING SPECIAL MENTION |
| | | | ELASTICITY | FLAVOR | | |
| Experimental example 1 | 93.3 | 105.8 | 8.3 | 7.2 | A | The chewiness, elasticity and suppleness are evident in the product. |
| Experimental example 2 | 9 3 . 5 | 104.3 | 8.3 | 7.8 | A | The chewiness, elasticity and suppleness are evident in the product. |
| Experimental example 3 | 93.0 | 104.8 | 8.4 | 7.8 | A | The chewiness, elasticity, suppleness and colorant are evident in the product. |
| Experimental example 4 | 93.8 | 115.6 | 8.5 | 8.5 | A | The chewiness, elasticity and suppleness are evident in the product. The flavor and colorant are satisfactory. |
| Experimental example 5 | 94.8 | 118.8 | 8.5 | 8.2 | A | The chewiness, elasticity and suppleness are evident in the product. Flavor has deteriorated somewhat due to being very sweet. Colorant is satisfactory. |
| Experimental example 6 | 94.0 | 104.5 | 8.2 | 7.4 | A | The elasticity and suppleness are satisfactory. |
| Experimental example 7 | 93.8 | 104.0 | 8.1 | 7.8 | A | The elasticity and suppleness are satisfactory. |
| Experimental example 8 | 94.5 | 109.5 | 8.1 | 7.9 | A | The elasticity, suppleness and colorant are satisfactory. |
| Experimental example 9 | 95.0 | 115.8 | 8.4 | 7.9 | A | The elasticity, suppleness, shine and colorant are satisfactory. |
| Experimental example 10 | 95.3 | 116.5 | 8.4 | 8.2 | A | The elasticity, suppleness, shine and colorant are satisfactory. |
| Experimental example 11 | 79.0 | 94.8 | 6.8 | 7.3 | B | Hard to chew and poor resilience but no rough sensation when chewing. |
| Experimental example 12 | 96.0 | 114.8 | 8.9 | 8.5 | A | Product elasticity and flavor are fine and stretch is okay. |
| Experimental example 13 | 87.0 | 100.5 | 7.1 | 6.9 | B | Somewhat deteriorated in elasticity, chewiness and rough taste. |
| Experimental example 14 | 94.0 | 99.0 | 8.3 | 7.8 | A | Elasticity, chewiness, and no rough taste in the mouth are fine but flavor has deteriorated somewhat. |

**Table 4**

| PRODUCT EVALUATION(2) (Australian beef) | | | | | | | |
|---|---|---|---|---|---|---|---|
| | RHEOMETER TEST | | | SENSATION TEST (10 pt. evaluation) | | FOLD TEST | FACT DESERVING SPECIAL MENTION |
| | RUPTURE INTENSITY (g) | INDENTATIONS (cm) | JELLY INTENSITY (g.cm) | ELASTICITY | FLAVOR | | |
| Experimental example 1 | 420 | 3.1 | 1302 | 8.3 | 7.2 | A | Effect from salt solution and alkali is evident. |
| Experimental example 2 | 410 | 2.9 | 1189 | 8.4 | 7.8 | A | Effect from salt solution and alkali is evident. |
| Experimental example 3 | 415 | 3.2 | 1328 | 8.4 | 7.8 | A | Effect from salt solution and alkali is evident. |
| Experimental example 4 | 400 | 3.1 | 1240 | 8.5 | 8.5 | A | Effect from salt solution and alkali is outstanding. |
| Experimental example 5 | 415 | 3.2 | 1328 | 8.5 | 8.2 | A | Effect from salt solution and alkali is outstanding. |
| Experimental example 6 | 400 | 3.2 | 1280 | 8.2 | 7.4 | A | Effect from salt solution and alkali is evident. |
| Experimental example 7 | 410 | 3.3 | 1353 | 8.2 | 7.8 | A | Effect from salt solution and alkali is evident. |
| Experimental example 8 | 420 | 3.6 | 1512 | 8.1 | 7.9 | A | Sufficient gellification from salt solution and alkali effect. |
| Experimental example 9 | 445 | 3.4 | 1513 | 8.0 | 7.9 | A | Sufficient gellification from salt solution and alkali effect. |
| Experimental example 10 | 450 | 3.2 | 1440 | 8.4 | 8.2 | A | Sufficient gellification from salt solution and alkali effect. |
| Experimental example 11 | 675 | 3.7 | 2775 | 6.8 | 7.3 | C | Effect of salt solution can be seen samewhat. |
| Experimental example 12 | 350 | 3.7 | 1295 | 8.9 | 8.5 | A | Sufficient gellification from salt solution and alkali effect. |
| Experimental example 13 | 440 | 3.5 | 1540 | 7 . 1 | 6.9 | B | Some slight gellification can be seen due to the alkali effect. |
| Experimental example 14 | 3 8 0 | 3.4 | 1292 | 8.3 | 7.3 | A | Sufficient gellification from salt solution and alkali effect. |

**Table 5**

| Additive amounts (Per Australian beef of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Comparative example 1 | 0 | 0 | 0 | 0 | 0 | 0 | 0 |
| Comparative example 2 | 0 | 0 | 0 | 0 | 0 | 0 | 0 |
| Comparative example 3 | 24 | 0 | 0 | 0 | 0 | 0 | 0 |
| Comparative example 4 | 24 | 3 | 0 | 0 | 0 | 0 | 0 |
| Comparative example 5 | 24 | 0 | 2 | 0 | 0 | 0 | 0 |
| Comparative example 6 | 24 | 0 | 0 | 5 | 0 | 0 | 0 |

**Table 6**

| MEAT PROCESSING EVALUATION (Australian beef) | | | | | | |
|---|---|---|---|---|---|---|
| | ADDITIVE SOLUTION ABSORPTION RATE(%) | pH | OUTER APPEARANCE (10 pt. evaluation) | | | FACTS DESERVING SPECIAL MENTION |
| | | | COLORANT | SHINE | ELASTICITY | |
| Comparative example 1 | ― | 5.6 | 5.4 | 5.9 | 6.0 | Whitened color due to drastic water separation. Variations in external and internal color can be seen. Elasticity is poor. |
| Comparative example 2 | 72.0 | 5.6 | 5.4 | 5.8 | 6.0 | Whitened color due to drastic water separation. |
| Comparative example 3 | 72.5 | 5.5 | 5.9 | 6.3 | 6.4 | Whitened color but water saparation is relatively slight. Swelling evident. |
| Comparative example 4 | 97.5 | 5.5 | 7.1 | 6.9 | 7.4 | Effect from salt solution. Fresh looking color and luster but only slight moisture. |
| Comparative example 5 | 95.5 | 6.5 | 7.2 | 7.0 | 7.2 | Whitened color and swelling evident. Water separation is relatively slight. |
| Comparative example 6 | 72.6 | 5.7 | 5.6 | 6.1 | 5.9 | No luster and no gloss. |

**Table 7**

| PRODUCT EVALUATION(1) (Australian beef) | | | | | | |
|---|---|---|---|---|---|---|
| | BAKING YIELD (%) | EXPANSION (%) | SENSATION TEST (10 pt. evaluation) | | FOLD TEST | FACTS DESERVCING SPECIAL MENTION |
| | | | ELASTICITY | FLAVOR | | |
| Comparative example 1 | 72.5 | 73.0 | 6.4 | 5.9 | D | Product is crumbly and tasteless. Juice is evident. |
| Comparative example 2 | 73.8 | 73.0 | 6.5 | 5.9 | D | Product is crumbly and tasteless. Juice is evident. |
| Comparative example 3 | 77.8 | 71.3 | 6.2 | 6.1 | D | Somewhat crumbly but difference from drip appears. Juice is evident. |
| Comparative example 4 | 79.4 | 74.3 | 6.8 | 6.4 | D | Crumbly sensation but meaty flavor is present. Juice is evident. |
| Comparative example 5 | 85.0 | 75.7 | 7.0 | 6.0 | C | Kind of like liver with some elasticity. Juice is evident. |
| Comparative example 6 | 73.3 | 70.5 | 6.5 | 6.1 | D | Relatively good chewy sensation, but not good to eat. Juice is evident. |

**Table 8**

| PRODUCT EVALUATION(2) (Australian beef) | | | | | | | |
|---|---|---|---|---|---|---|---|
| | RHEOMETER TEST | | | SENSATION TEST (10 pt. evaluation) | | FOLD TEST | FACTS DESERVING SPECIAL MENTION |
| | RUPTURE INTENSITY (g) | INDENTATIONS (cm) | JELLY INTENSITY (g.cm) | ELASTICITY | FLAVOR | | |
| Comparative example 1 | 1115 | 2.5 | 2787 | 6.4 | 4.9 | D | Crumbly, and only the strength is high. |
| Comparative example 2 | 1110 | 2.6 | 2886 | 6.5 | 4.9 | D | Crumbly, and the strength is high. |
| Comparative example 3 | 920 | 2.0 | 1840 | 6.2 | 5.1 | D | Crumbly, and the strength is high. |
| Comparative example 4 | 895 | 2.6 | 2327 | 6.8 | 5.4 | D | Effect of salt solution can be seen but gelling is inadequate. |
| Comparative example 5 | 780 | 2.7 | 2106 | 7.0 | 5.0 | C | Effect of alkalis can be seen but gelling is inadequate. |
| Comparative example 6 | 1205 | 2.6 | 3133 | 6.5 | 5.1 | D | Crumbly, and the strength is high. |

**Table 9**

| Additive amounts (Per domestic chicken breast meat of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Experimental example 15 | 30 | 3 | 0.5 | 0 | 0 | 0 | 0 |
| Experimental example 16 | 30 | 3 | 2 | 0 | 0 | 0 | 0 |
| Experimental example 17 | 30 | 3 | 4 | 0 | 0 | 0 | 0 |
| Experimental example 18 | 30 | 0.5 | 2 | 0 | 0 | 0 | 0 |
| Experimental example 19 | 30 | 5 | 2 | 0 | 0 | 0 | 0 |

**Table 10**

| MEAT PROCESSING EVALUATION (Domestic chicken breast meat) | | | | | | |
|---|---|---|---|---|---|---|
| | ADDITIVE SOLUTION ABSORPTION RATE (%) | pH | OUTER APPEARANCE (10 pt. evaluation) | | | FACTS DESERVING SPECIAL MENTION |
| | | | COLORANT | SHINE | ELASTICITY | |
| Experimental example 15 | 90.4 | 6.3 | 6.9 | 6.1 | 7.1 | Luster evident. A slitht greasy feeling is present. |
| Experimental example 16 | 95.3 | 7.1 | 5.9 | 7.3 | 8.2 | Luster evident. A greasy feeling is strongly present. |
| Experimental example 17 | 98.5 | 8.0 | 8.1 | 8.3 | 7.9 | Luster evident. A greasy feeling is strongly outstanding. |
| Experimental example 18 | 88.4 | 7.3 | 7.2 | 6.1 | 8.2 | Kind of bleached look, but no fat shrinkage. |
| Experimental example 19 | 95.1 | 7.1 | 8.9 | 8.3 | 9.1 | Luster evident. Fat shrinkage. |

**Table 11**

| PRODUCT EVALUATION(1) (Domestic chicken breast meat) | | | | | | |
|---|---|---|---|---|---|---|
| | BAKING YIELD (%) | EXPANSION (%) | SENSATION TEST (10 pt. evaluation) | | FOLD TEST | FACTS DESERVING SPECIAL MENTION |
| | | | ELASTICITY | FLAVOR | | |
| Experimental example 15 | 85.0 | 89.5 | 6.9 | 7.2 | B | Baking yield and swell rate both low. Gellification trend is weak. |
| Experimental example 16 | 90.4 | 110.5 | 8.1 | 8.3 | B | Improved baking yield, swell rate and elasticity. |
| Experimental example 17 | 92.5 | 116.8 | 7.9 | 8.1 | A | Excels in elasticity, gloss and yield. |
| Experimental example 18 | 88.7 | 100.5 | 6.5 | 7.2 | B | Seems greatly lacking in elasticity. |
| Experimental example 19 | 90.3 | 116.5 | 8.9 | 8.6 | A | Excels in elastcity, gloss and taste. |

**Table 12**

| PRODUCT EVALUATION(2) (Domestic chicken breast meat) | | | | | | | |
|---|---|---|---|---|---|---|---|
| | RHEOMETER TEST | | | SENSATION TEST (10 pt. evaluation) | | FOLD TEST | FACTS DESERVING SPECIAL MENTION |
| | RUPTURE INTENSITY (g) | INDENTATIONS (cm) | JELLY INTENSITY (g.cm) | ELASTICITY | FLAVOR | | |
| Experimental example 15 | 435 | 2.5 | 1087 | 6.9 | 7.2 | B | Effect of salt salutiona and alkali is somewhat evident. |
| Experimental example 16 | 465 | 2.8 | 1302 | 8.1 | 8.3 | B | Improved baking yield, swell rate and elasticity. |
| Experimental example 17 | 410 | 2.4 | 984 | 7.9 | 8.1 | A | Excels in elasticity, gloss and yield. |
| Experimental example 18 | 315 | 2.7 | 850 | 6.3 | 7.0 | B | Seems greatly lacking in elaxticity. |
| Experimental example 19 | 405 | 2.4 | 972 | 8.9 | 8.6 | A | Excels in elasticity, gloss and taste. |

**Table 13**

| Additive amounts (Per domestic pork fillet meat of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Experimental example 20 | 20 | 3 | 0.5 | 0 | 0 | 0 | 0 |
| Experimental example 21 | 20 | 3 | 2 | 0 | 0 | 0 | 0 |
| Experimental example 22 | 20 | 3 | 4 | 0 | 0 | 0 | 0 |
| Experimental example 23 | 20 | 0.5 | 2 | 0 | 0 | 0 | 0 |
| Experimental example 24 | 20 | 5 | 2 | 0 | 0 | 0 | 0 |

**Table 14**

| MEAT PROCESSING EVALUATION (Domestic pork fillet meat) | | | | | | |
|---|---|---|---|---|---|---|
| | ADDITIVE SOLUTION ABSORPTION RATE (%) | pH | OUTER APPEARANCE (10 pt. evaluation) | | | FACTS DESERVING SPECIAL MENTION |
| | | | COLORANT | SHINE | ELASTICITY | |
| Experimental example 20 | 99.1 | 6.3 | 6.8 | 6.1 | 7.2 | Luster and color adjustment seem okay. |
| Experimental example 21 | 100.0 | 7.3 | 8.2 | 7.1 | 8.1 | Luster and color adjustment are improved and seem satisfactory. |
| Experimental example 22 | 100.0 | 8.1 | 8.9 | 8.1 | 7.9 | Luster and color adjustment are good vivid, bright impression. |
| Experimental example 23 | 98.2 | 7.3 | 6.9 | 7.4 | 7.1 | Kind of bleached appearance, drip is appearing. |
| Experimental example 24 | 100.0 | 7.2 | 8.1 | 8.9 | 8.9 | Luster and color adjustment are both good. |

**Table 15**

| PRODUCT EVALUATION (1) (Domestic pork fillet meat) | | | | | | |
|---|---|---|---|---|---|---|
| | BAKING YIELD (%) | EXPANSION (%) | SENSATION TEST | | FOLD TEST | FACTS DESERVING SPECIAL MENTION |
| | | | ELASTICITY | FLAVOR | | |
| Experimental example 20 | 83.5 | 89.5 | 6.8 | 7.2 | B | Product has somewhat weak elasticity. |
| Experimental example 21 | 87.0 | 102.5 | 8.2 | 8.2 | B | No special problems as a product, with good taste. |
| Experimental example 22 | 88.5 | 113.4 | 8.9 | 8.4 | A | As a product, the luster, taste and gelling are good. |
| Experimental example 23 | 89.0 | 102.5 | 6.5 | 8.2 | C | Elasticity and gelling are somewhat weak. |
| Experimental example 24 | 88.5 | 109.5 | 8.4 | 9.1 | A | Elasticity, taste and gelling are excellent. |

**Table 16**

| PRODUCT EVALUATION(2) (Domestic pork fillet meat) | | | | | | | |
|---|---|---|---|---|---|---|---|
| | RHEOMETER TEST | | | SENSATION TEST (10 pt. evaluation) | | FOLD TEST | FACTS DESERVING SPECIAL MENTION |
| | RUPTURE INTENSITY (g) | INDENTATIONS (cm) | JELLY INTENSITY (g.cm) | ELASTICITY | FLAVOR | | |
| Experimental example 20 | 460 | 3.9 | 1794 | 6.8 | 7.2 | B | Salt solution effect is approved. |
| Experimental example 21 | 483 | 2.8 | 1352 | 8.2 | 8.2 | B | Gelling is sufficient with the salt solutions and alkali effect. |
| Experimental example 22 | 375 | 3.1 | 1162 | 8.9 | 8.4 | A | Gelling is sufficient with the salt solution and alkali effect. |
| Experimental example 23 | 315 | 3.1 | 977 | 6.5 | 8.2 | C | Alkali effect is approved. Gelling is unsufficient. |
| Experimental example 24 | 360 | 3.1 | 1116 | 8.4 | 9.1 | A | Effect of salt solution and alkali is approved. |

**Table 17**

| Additive amounts (Per Chinese mixed horsemeat of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Experimental example 25 | 10 | 3 | 0.5 | 0 | 0 | 0 | 0 |
| Experimental example 26 | 10 | 3 | 2 | 0 | 0 | 0 | 0 |
| Experimental example 27 | 10 | 3 | 4 | 0 | 0 | 0 | 0 |
| Experimental example 28 | 10 | 0.5 | 2 | 0 | 0 | 0 | 0 |
| Experimental example 29 | 10 | 5 | 2 | 0 | 0 | 0 | 0 |
| Comparative example 7 | 10 | 0 | 0 | 0 | 0 | 0 | 0 |

**Table 18**

| MEAT PROCESSING EVALUATION (Chinese mixed horsemeat) | | | | | | |
|---|---|---|---|---|---|---|
| | ADDITIVE SOLUTION ABSORPTION RATE (%) | pH | OUTER APPEARANCE (10 pt. evaluation) | | | FACTS DESERVING SPECIAL MENTION |
| | | | COLORANT | SHINE | ELASTICITY | |
| Experimental example 25 | 85.7 | 6.5 | 6.4 | 6.9 | 7.1 | Luster and elasticity are both bad, moisture is coming out. |
| Experimental example 26 | 95.0 | 7.4 | 7.1 | 7.2 | 8.2 | Luster and elasticity are both satisfactory. No moisutre coming out. |
| Experimental example 27 | 96.4 | 8.3 | 8.1 | 8.7 | 7.9 | Luster and elasticity are both bad, and no moisture is coming out. |
| Experimental example 28 | 74.2 | 7.4 | 7.1 | 7.1 | 6.8 | Luster and elasticity are both unsatisfactory, moisutre is coming out. |
| Experimental example 29 | 92.8 | 7.4 | 7.8 | 8.2 | 9.1 | Luster and elasticity are both satisfactory, and no moisture is coming out. |
| Comparative example 7 | 57.1 | 5.8 | 5.9 | 6.1 | 5.2 | Luster and elasticity are both bad, plenty moisture is coming out. |

**Table 19**

| PRODUCT EVALUATION (1) (Chinese mixed horsemeat) | | | | | | |
|---|---|---|---|---|---|---|
| | BAKING YIELD (%) | EXPANSION (%) | SENSATION TEST (10pt. evaluation) | | FOLD TEST | FACTS DESERVING SPECIAL MENTION |
| | | | ELASTICITY | FLAVOR | | |
| Experimental example 25 | 78.0 | 89.1 | 6.8 | 6.5 | C | Though crumbly, but soft texture when chewed. |
| Experimental example 26 | 90.0 | 103.2 | 8.2 | 8.6 | A | Bakes well, pink color on the cut ends, has good taste. |
| Experimental example 27 | 93.5 | 116.3 | 8.3 | 8.5 | A | Bakes well, weak pink color on the cut ends. Soft texture. |
| Experimental example 28 | 87.5 | 110.5 | 8.6 | 8.4 | B | Seems soft when baked, doesn't have a firm texture. |
| Experimental example 29 | 91.0 | 115.9 | 8.9 | 8.0 | A | Bakes well, slightly weak pink color on the cut ends. Good taste. |
| Comparative example 7 | 65.5. | 73.2 | 5.2 | 6.1 | D | Luster and flavor are both bad, and crumbly. |

**Table 20**

| PRODUCT EVALUATION (2) (Chinese mixed horsemeat) | | | | | | | |
|---|---|---|---|---|---|---|---|
| | RHEOMETER TEST | | | SENSATION TEST (10 pt.evaluation) | | FOLD TEST | FACTS DESERVING SPECIAL MENTION |
| | RUPTURE INTENSITY (g) | INDENTATIONS (cm) | JELLY INTENSITY (g.cm) | ELASTICITY | FLAVOR | | |
| Experimental example 25 | 685 | 3.1 | 2123 | 6.8 | 6.5 | C | Somewhat of a salt solution effect is present, but has excellent strength. |
| Experimental example 26 | 328 | 2.9 | 951 | 8.2 | 8.6 | A | Gelling is sufficient with the salt solution and alkali effect. |
| Experimental example 27 | 390 | 2.9 | 1131 | 8.3 | 8.5 | A | Gelling is sufficent with the salt solution and alkali effect. |
| Experimental example 28 | 450 | 2.7 | 1215 | 8.6 | 8.4 | B | Alkali effect has been approved but the gelling is inadequate. |
| Experimental example 29 | 420 | 3.2 | 1344 | 8.9 | 8.0 | A | Salt solution and alkali effect is evident but taste has deteriorated somewhat. |
| Comparative example 7 | 1290 | 2.9 | 3741 | 5.2 | 6.1 | D | Intensity is very strong but no gelling whatsoever. |

**Table 21**

| Additive amounts (Per Australian mixed mutton of 300 grams) | | | | | | | |
|---|---|---|---|---|---|---|---|
| | DRIP (g) | SALTS (g) | ALKALIS (g) | ALCOHOL (g) | VITAMINS | | SUGARS (g) |
| | | | | | C(mg) | E(mg) | |
| Experimental example 30 | 19 | 3 | 0.5 | 0 | 0 | 0 | 0 |
| Experimental example 31 | 19 | 3 | 2 | 0 | 0 | 0 | 0 |
| Experimental example 32 | 19 | 3 | 4 | 0 | 0 | 0 | 0 |
| Experimental example 33 | 19 | 0.5 | 2 | 0 | 0 | 0 | 0 |
| Experimental example 34 | 19 | 5 | 2 | 0 | 0 | 0 | 0 |
| Comparative example 8 | 19 | 0 | 0 | 0 | 0 | 0 | 0 |

**Table 22**

| MEAT PROCESSING EVALUATION (Australian mixed mutton) | | | | | | |
|---|---|---|---|---|---|---|
| | ADDITIVE SOLUTION ABSORPTION RATE (%) | pH | OUTER APPEARANCE (10 pt. evaluation) | | | FACTS DESERVING SPECIAL MENTION |
| | | | COLORANT | SHINE | ELASTICITY | |
| Experimental example 30 | 83.5 | 6.4 | 7.1 | 6.2 | 7.3 | Lots of moisture comes out when baking. Is sticky and has an odor. |
| Experimental example 31 | 95.5 | 7.3 | 8.2 | 7.8 | 8.3 | Has elasticity, little moisture comes out. |
| Experimental example 32 | 98.3 | 8.2 | 8.1 | 8.2 | 7.9 | Seems viscous. |
| Experimental example 33 | 82.9 | 7.3 | 7.2 | 7.3 | 6.9 | Luster and elasticity are both weak and gelling is insufficient. |
| Experimental example 34 | 99.3 | 7.4 | 5.9 | 8.2 | 8.9 | No moisture comes out when baking, product is in gelled, emulsified state. |
| Comparative example 8 | 62.0 | 5.9 | 6.2 | 6.1 | 5.2 | Luster and elasticity are both weak and lots of moisture is comes out when baking. |

**Table 23**

| PRODUCT EVALUATION (1) (Chinese mixed mutton) | | | | | | |
|---|---|---|---|---|---|---|
| | BAKING YIELD (%) | EXPANSION (%) | SENSATION TEST | | FOLD TEST | FACTS DESERVING SPECIAL MENTION |
| | | | ELASTICITY | FLAVOR | | |
| Experimental example 30 | 75.0 | 87.5 | 6.8 | 6.2 | C | No elasticity. |
| Experimental example 31 | 89.0 | 100.3 | 8.9 | 8.1 | B | Elasticity is present. Soaked with moisture. |
| Experimental example 32 | 89.0 | 110.8 | 8.1 | 8.6 | A | Elasticity and dampness are excellent. Seems soft. |
| Experimental example 33 | 83.0 | 98.5 | 8.2 | 7.1 | B | The cross section is a little bit white but seems damp. |
| Experimental example 34 | 85.0 | 105.8 | 8.1 | 8.0 | C | Has elasticity and luster. |
| Comparative example 8 | 68.0 | 68.4 | 5.2 | 5.9 | D | Is crumbly. The mutton has generally shrunken. |

**Table 24**

| PRODUCT EVALUATION (2) (Australian mixed mutton) | | | | | | | |
|---|---|---|---|---|---|---|---|
| | RHEOMETER TEST | | | SENSATION TEST (10 pt. evaluation) | | FOLD TEST | FACTS DESERVING SPECIAL MENTION |
| | RUPTURE INTENSITY (g) | INDENTATIONS (cm) | JELLY INTENSITY (g.cm) | ELASTICITY | FLAVOR | | |
| Experimental example 30 | 660 | 3.3 | 2178 | 6.8 | 6.2 | C | Somewhat of a salt solution effect but strength is high. |
| Experimental example 31 | 345 | 3.1 | 1070 | 8.9 | 8.1 | B | Gelling is sufficient with the salt solution and alkali effect. |
| Expertmental example 32 | 426 | 3.2 | 1363 | 8.1 | 8.6 | A | Gelling is sufficient with the salt solution and alkali effect. |
| Experimental example 33 | 460 | 2.8 | 1288 | 8.2 | 7.1 | B | Alkali effect is okay but gelling is insufficient. |
| Experimental example 34 | 405 | 2.4 | 972 | 8.1 | 8.0 | C | Alkali and salt solution effect are okay but the taste has deteriorated. |
| Comparative example 8 | 860 | 2.4 | 2064 | 4.2 | 5.9 | D | High strength but crumbly. |

## Claims

1. Processed meat selected from livestock meat comprised of chicken, pork, cattle, mutton and horse meat, and wild animal meat comprised of deer meat, wild boar meat and rabbit meat, comprising 0.2 to 5, preferably 0.3 to 4 and more preferably 0.5 to 2.5 parts by weight per 100 parts by weight of meat, of salt(s) selected from any one of NaCl, KCl, CaCl₂ and MgCl₂ or a mixture thereof; and further comprising 0.1 to 6, preferably 0.3 to 4 and more preferably 0.5 to 2 parts by weight per 100 parts by weight of meat, of alkali (s) selected from at least one of NaHCO₃, Na₂CO₃, KHCO₃, K₂CO₃ and NH₄HCO₃; and obtainable when said salt(s) are added to the meat as a 1.0 to 7.0 M solution in water, material meat drip or other meat drip, and said alkali(s) are added to the meat as a 0,1 to 4.0 M solution in water, material meat drip or other meat drip or a mixture of such drip and water.

2. Processed meat according to claim 1, wherein 100 parts by weight of meat further comprises one or more of the following substances: 0.5 to 12 or preferably 1 to 9 parts by weight of alcohol, 1 x 10⁻³ to 300 x 10⁻³ or preferably 5 x 10⁻³ to 150 x 10⁻³ parts by weight of vitamin E preparations, 6 x 10⁻³ to 500 x 10⁻³ or preferably 20 x 10⁻³ to 300 x 10⁻³ parts by weight of vitamin C preparations, 1 to 20 or preferably 4 to 12 parts by weight of saccharides, 0.1 to 5 or preferably 1.0 to 4.7 parts by weight of albumen, and 0.01 to 5 or preferably 0.1 to 3 parts by weight of antioxidants.

3. Processed meat according to claim 1 or 2 comprising meat having a reduced drip in the meat feedstock.

4. Processed meat according to claim 1 or either one of claims 2 or 3, said meat further comprising one or more of the following additives: bond reinforcing agents such as Curd-run 20/30 (made by Takeda Yakuhin Kabushiki Kaisha), soybean protein powder, or casein sodium; emulsifying agents such as albumen, lecithin or sugar esters; functional agents such as DHA, EPA, chitosan, calcium, vitamines (A, B group, D, K, folic acid) or collagen; adhesion reinforcing agents such as sodium alginate, calcium citrate, corn starch, potato starch powder or glucomannan; preservation agents such as sorbic acid or potassium sorbate; animal or plant fibres such as soybean protein fiber, chitin or meat paste; antioxidants such as ethylenediamine tetraacetate, sodiumdicalcium, erythorbic acid or dibutylhydroxyanisole; deodorants such as Sun-Frabon T-200 or Sun-Frabon HG (made by Taiyo Kagaku Kabushiki Kaisha); animal or plant oils such as coconut oil, corn oil, rape oil, lard or fish oil; condiments such as glycine, L-glutamic acid, sodium L-glutaminate, disodium inosinate, disodium guanylate, fish peptide, beef powder, beef extract or pork extract; and spices such as pepper, ginger, paprika, nutmeg, mace, thyme, allspice, onion, garlic, coriander, cardamon, caraway, sage, laurel, marjoram, clove or cinnamon.

5. A method of preparing processed meat, comprising the following steps A) and B) performed in either sequence or simultaneously, in the latter case with a mixed salt and alkali solution as defined in said following steps A) and B) , respectively:
A) salt-dissolving cell membrane, myofibril, perimysium, collagen, lipid, fat and cell membrane and collagen in fat by impregnating 100 parts by weight of meat with 2 to 15 parts by weight of a highly concentrated, 1.0 to 7.0 M, solution of salt(s) as defined in claim 1; and
B) alkali impregnation of 100 parts by weight of meat with 0.5 to 12 parts by weight of a highly concentrated, 0.1 to 4.0 M, solution of alkali(s) as defined in claim 1.

6. The method of claim 5, further comprising the following step C), either performed after the steps A) and B) as defined in claim 5 or simultaneously with step B) :
C) impregnating the meat with an additive solution containing any one or more of sugars, vitamins, animal and plant protein powder or antioxidants.

7. The method of claim 5 or claim 6, further comprising a salt-dissolution and gelling maturation process in which the meat is penetrated and dispersed with a highly concentrated solution of salt or a highly concentrated solution of alkali after the salt-dissolution process, the salt-alkali impregnation process, the alkali impregnation process or the additive impregnation process as described in the sequences of steps A) , B) and C) according to claims 5 and 6.

8. The method of any one or more of claims 5 to 7, wherein the steps A) and B) as defined in claim 5, step C) as defined in claim 6 and the maturation process of claim 7 are performed at a temperature for protein material processing of less than 20°C and preferably less than 10°C, and/or at a pH of 5 to 10, preferably 6.5 to 8.5.

9. The method of any one or more of claims 5 to 8, wherein the steps A) and B) as defined in claim 5, performed separately or simultaneously, and step C) as defined in claim 6, performed separatey or simultaneously with said step B), are done by any one of the following processes: an injection process in which said solutions are injected into the meat using an injector; a spraying process in which said solutions are sprayed onto the meat; an immersion process in which the meat is immersed in baths containing said solutions; an application process in which said solution are applied to the meat using brushing means; or a mixing-and-kneading process in which the meat is mixed with said solutions and kneaded using an agitator.

10. The method of any one or more of claims 7 to 9, wherein the processes of salt-dissolution and gelling maturing consist of any of the following processes: the massage process, vibration process, ultrasonic process and mixing-and-kneading process.

## Patentansprüche

1. Aus Hühner-, Schweine-, Rind-, Hammel- und Pferdefleisch ausgewähltes behandeltes Fleisch eines Viehbestandes sowie aus Hirsch-, Wildschwein- und Kaninchenfleisch ausgewähltes behandeltes Fleisch wilder Tiere, umfassend 0,2-5, vorzugsweise 0,3-4 und mehr bevorzugt 0,5-2,5 Gewichtsteile pro 100 Gewichtsteile Fleisch von unter NaCl, KCl, CaCl₂ und MgCl₂ oder einem Gemisch davon ausgewähltem Salz (Salzen); und ferner umfassend 0,1-6, vorzugsweise 0,3-4 und mehr bevorzugt 0,5-2 Gewichtsteile pro 100 Gewichtsteile Fleisch von mindestens einem unter NaHCO₃, Na₂CO₃, KHCO₃, K₂CO₃ und NH₄HCO₃ ausgewählten Alkali (Alkalien); welches behandelte Fleisch durch Zugabe von Salz (Salzen) zu dem Fleisch in Form einer 1,0-7,0 molären Lösung im Wasser, einer Fleischerzeugnis-Abtropfflüssigkeit oder einer anderen Fleischabtropfflüssigkeit erhältlich ist, und erwähntes Alkali (erwähnte Alkalien) als eine 0,1-4,0 moläre Lösung in Wasser, eine Fleischerzeugnis-Abtropfflüssigkeit oder andere Fleischabtropfflüssigkeit oder eines Gemischs einer solchen Abtropfflüssigkeit und Wasser dem Fleisch beigefügt wird.

2. Behandeltes Fleisch nach Anspruch 1, wobei 100 Gewichtsteile von Fleisch ferner eine oder mehrere der folgenden Substanzen enthalten: 0,5-12 oder vorzugsweise 1-9 Gewichtsteile Alkohol, 1 x 10⁻³ bis 300 x 10⁻³ oder vorzugsweise 5 x 10⁻³ bis 150 x 10⁻³ Gewichtsteile Vitamin E-Präparate, 6 x 10⁻³ bis 500 x 10⁻³ oder vorzugsweise 20 x 10⁻³ bis 300 x 10⁻³ Gewichtsteile Vitamin C-Präparate, 1-20 oder vorzugsweise 4-12 Gewichtsteile Saccharide, 0,1-5 oder vorzugsweise 1,0-4,7 Gewichtsteile Eiweiss und 0,01-5 oder vorzugsweise 0,1-3 Gewichtsteile Antioxidationsmittel.

3. Behandeltes Fleisch nach Anspruch 1 oder 2, umfassend Fleisch mit reduzierter Abtropfflüssigkeit in dem zugeführten Fleisch.

4. Behandeltes Fleischprodukt nach Anspruch 1 oder einem der Ansprüche 2 oder 3, welches Fleischprodukt ferner einen oder mehrere der folgenden Zusatzstoffe umfasst: Bindungsverstärkungsmittel, wie etwa Curd-run 20/30 (hergestellt von Takeda Yakuhin Kabushiki Kaisha), Sojabohnen-Proteinpulver oder Casein-Natrium; Emulgiermittel, wie etwa Eiweiss, Lecithin oder Zucker-Ester; Hilfsmittel, wie etwa DHA, EPA, Chitosan, Calcium, Vitamine (A, B-Gruppe, D, K, Folsäure) oder Kollagen; Klebeverstärkungsmittel, wie etwa Natriumalginat, Calciumzitrat, Maisstärke, Kartoffelstärkepulver oder Glukomannan; Konservierungsmittel, wie etwa Sorbinsäure oder Kaliumsorbat; animalische Fasern oder Pflanzenfasern wie etwa Sojabohnen-Proteinfaser, Chitin- oder Fleischpasta; Antioxidationsmittel, wie etwa Ethylendiamin-Tetraazetat, Natriumdicalcium, Isoaskorbinsäure oder Dibutylhydroxyanisol; Desodoriermittel, wie etwa Sun-Frabon T-200 oder Sun-Frabon HG (hergestellt von Taigo Kagaku Kabushiki Kaisha); tierische Öle oder Pflanzenöle, wie etwa Kokosnussöl, Maisöl, Rapsöl, Schmalz oder Fischöl; Würze, wie etwa Glycin, L-Glutaminsäure, Natrium-L-Glutaminat, Dinatriuminosinat, Dinatriumguanylat, Fischpeptid, Rindfleischpulver, Rindfleischextrakt oder Schweinefleischextrakt; und Gewürze, wie etwa Pfeffer, Ingwer, Paprika, Muskat, Thymian, Piment, Zwiebel, Knoblauch, Koriander, Kardamom, Kümmel, Salbei, Lorbeer, Majoran, Gewürznelke oder Zimt.

5. Verfahren zur Herstellung von behandeltem Fleisch, umfassend folgende entweder in Reihenfolge oder gleichzeitig durchgeführte Stufen A) und B), wenn gleichzeitig durchgeführt mit einer gemischten Salz- und Alkalilösung, wie in den folgenden Stufen A) bzw. B) definiert:
A) Salzlösung von Zellenmembran, Myofibril, Perimysium, Kollagen, Lipid, Fett und Zellenmembran und Kollagen in Fett durch Imprägnieren von 100 Gewichtsteilen Fleisch mit 2-15 Gewichtsteilen einer stark konzentrierten 1,0-7,0 M-Lösung von Salz (Salzen), wie in Anspruch 1 definiert; und
B) Alkali-Imprägnierung von 100 Gewichtsteilen Fleisch mit 0,5-12 Gewichtsteilen einer stark konzentrierten 0,1-4,0 M-Alkalilösung, wie in Anspruch 1 definiert.

6. Verfahren nach Anspruch 5, ferner umfassend folgende Stufe C), die entweder nach den Stufen A) und B), wie in Anspruch 5 definiert, oder gleichzeitig mit Stufe B) durchgeführt wird:
C) Imprägnierung des Fleisches mit einer Zusatzlösung enthaltend einen oder mehrere Zucker, Vitamine, animalisches oder pflanzliches Proteinpulver oder Antioxidationsmittel.

7. Verfahren nach Anspruch 5 oder 6, ferner umfassend ein Salz-Lösungsverfahren und einen Gelier-Reifungsprocess, bei welchen das Fleisch nach dem Salz-Lösungsverfahren, dem Alkali-Imprägnierungsverfahren oder dem zusätzlichen Imprägnierungsverfahren, wie in den Abschnitten von Stufe A), B) und C) nach Anspruch 5 und 6 beschrieben, mit einer stark konzentrierten Salzlösung oder einer stark konzentrierten Alkalilösung durchdrängt und dispergiert wird.

8. Verfahren nach einem oder mehreren der Ansprüche 5-7, wonach die in Anspruch 5 definierten Stufen A) und B), die in Anspruch 6 definierte Stufe C) und der Reifungsprozess von Anspruch 7 bei einer Temperatur für Proteinstoffe von weniger als 20°C und vorzugsweise weniger als 10°C und/oder bei einem pH von 5-10, vorzugsweise 6,5-8,5 durchgeführt wird.

9. Verfahren nach einem oder mehreren der Ansprüche 5-8, wonach die in Anspruch 5 definierten, separat oder gleichzeitig durchgeführten Stufen A) und B), und die in Anspruch 6 definierte, separat oder gleichzeitig mit Stufe B) durchgeführte Stufe C) in einem der folgenden Verfahren ausgeführt werden: Einspritzverfahren, bei welchem erwähnte Lösungen unter Benutzung einer Einspritzdüse in das Fleisch injiziert werden; Zerstäubungsverfahren, bei welchem erwähnte Lösungen auf das Fleisch gesprüht werden; Eintauchverfahren, bei welchem das Fleisch in erwähnte Lösungen enthaltende Bäder eingetaucht wird; Aufstrichverfahren, bei welchem erwähnte Lösung mittels Bürsten auf das Fleisch aufgetragen wird; oder Misch- und Knetverfahren, bei welchem das Fleisch mit erwähnten Lösungen gemischt und unter Verwendung eines Rührwerks geknetet wird.

10. Verfahren nach einem oder mehreren der Ansprüche 7-9, wonach das Salz-Lösungsverfahren und der Gelier-Reifungsprozess aus einem der folgenden Verfahren besteht: Massageverfahren, Vibrationsverfahren, Ultraschallverfahren und Misch- und Knetverfahren.

## Revendications

1. Viande préparée choisie parmi la viande des animaux domestiques comprenant l'a viande de poulet, de porc, de veau, de mouton et de cheval, et la viande des animaux sauvages comprenant la viande de cerf, de sanglier et de lapin, comprenant 0,2-5, préférablement 0,3-4 et plus préférablement 0,5-2,5 parties en poids les cent parties en poids de viande, de sel(s) choisi(s) parmi l'un quelconque de NaCl, KCl, CaCl₂ et MgCl₂ ou un mélange de ceux-ci ; et davantage comprenant 0,1-6, préférablement 0,3-4 et plus préférablement 0,5-2 parties en poids les cent parties en poids de viande, d'alcali(s) choisi(s) parmi au moins l'un de NaHCO₃, Na₂CO3, KHCO₃, K₂CO₃ et NH₄HCO₃ ; et réalisable en ajoutant le (s) dit (s) sel (s) à la viande en tant qu'une solution 1.0-7.0 molaire en eau, jus de viande matériel ou d'autre jus de viande, et le(s)dit(s) alcali(s) sont ajoutés à la viande en tant qu'une solution 0.1-4.0 molaire en eau, jus de viande matériel ou d'autre jus de viande ou un mélange d'un tel jus et d'eau.

2. Viande préparée selon la revendication 1, où 100 parties en poids de viande comprennent aussi une ou plusieurs des substances suivantes : 0,5-12 ou préférablement 1-9 parties en poids d'alcool, 1 x 10⁻³ à 300 x 10⁻³ ou préférablement 5 x 10⁻³ à 150 x 10⁻³ parties en poids de préparations de vitamine E, 6 x 10⁻³ à 500 x 10⁻³ ou préférablement 20 x 10⁻³ à 300 x 10⁻³ parties en poids de préparations de vitamine C, 1-20 ou préférablement 4-12 parties de poids de saccharides, 0,1-5 ou préférablement 1,0-4,7 parties en poids d'albumen, et 0,01-5 ou préférablement 0,1-3 parties en poids d'antioxydants.

3. Viande préparée selon la revendication 1 ou 2 comprenant de la viande présentant une quantité réduite de jus dans les produits bruts de viande.

4. Viande préparée selon la revendication 1 ou l'une quelconque des revendications 2 ou 3, ladite viande comprenant en plus un ou plusieurs des additifs suivants : des agents renforçant la liaison, tels que Curd-run 20/30 (produit par Takeda Yakuhin Kabushiki Kaisha), poudre protéique de graine de soja, ou caséine-sodium ; émulsifiants tels qu'albumen, lécithine ou esters de sucre ; des agents fonctionnels tels que ADH, AEP, chitosan, calcium, vitamines (A, groupe B, D, K, acide folique) ou collagène ; des agents renforçant l'adhésion tels qu'algine de sodium, citrate de calcium, amidon de maïs, fécule de pommes de terre ou glucomanne ; des agents de préservation tels qu'acide sorbique ou sorbate de potassium ; fibres animales ou végétales telles que fibres protéiques de graine de soya, chitine ou pâte de viande ; antioxydants tels que diamine d'éthylène tetra-acétate, bicalcium de sodium, acide iso-ascorbique ou anisole d'hydroxyde dibutyle ; désodorisants tels que Sun-Frabon T-200 ou Sun-Frabon HG (produit par Taiyo Kagaku Kabushiki Kaisha), huiles animales ou végétales telles qu'huile de coprah, huile de mais, huile de colza, huile de lard ou huile de poisson ; des condiments tels que glycine, acide glutamique L, glutaminate de sodium L, inosinate de disodium, guanylate de disodium, peptide de poisson, poudre de boeuf, extrait de boeuf ou extrait de porc ; et des épices telles que poivre, gingembre, paprika, muscade, macis, thym, quatre-épices, oignon, ail, coriandre, cardamome, cumin, sauge, laurier, marjolaine, girofle ou cannelle.

5. Procédé pour la préparation de la viande préparée, comprenant les étapes suivantes A) et B) effectuées soit à la suite ou en même temps, dans le dernier cas avec une solution mélangée de sel et d'alcali comme défini dans les étapes suivantes, respectivement A) et B) :
A) membrane cellulaire dissolvant du sel, myofibrille, périmysium, collagène, lipide, graisse et membranes cellulaires et collagène en graisse par imprégnation de 100 parties en poids de viande avec 2-15 parties en poids d'une solution 1.0-7.0 molaire hautement concentrée de sel(s) comme défini dans la revendication 1 ; et
B) imprégnation d'alcali de 100 parties en poids de viande avec 0,5-12 parties en poids d'une solution 0.1-4.0 molaire hautement concentrée d'alcali(s) comme défini dans la revendication 1.

6. Procédé selon la revendication 5, comprenant aussi l'étape suivante C) soit effectuée après les étapes A) et B) comme définies dans la revendication 5 ou conjointement avec l'étape B) :
C) imprégnation de la viande avec une solution additive contenant un ou plusieurs sucres, vitamines, poudres protéiques animales ou végétales ou antioxydants.

7. Procédé selon la revendication 5 ou 6, comprenant de plus un procédé de dissolution saline et de maturation gélifiante, dans lequel la viande est pénétrée et dispersée avec une solution hautement concentrée de sel ou une solution hautement concentrée d'alcali après le procédé de dissolution saline, le procédé d'imprégnation de sel-alcali, le procédé d'imprégnation d'alcali ou le procédé d'imprégnation additive comme décrits dans les étapes A), B) et C) selon les revendications 5 et 6.

8. Procédé selon l'une quelconque ou plusieurs des revendications 5-7, où les étapes A) et B) comme définies dans la revendication 5, l'étape C) comme défini dans la revendication 6 et le procédé de maturation de la revendication 7 sont effectués à une température pour préparer de la matière protéique inférieure à 20°C et préférablement inférieure à 10°C, et/ou à un pH de 5-10, préférablement 6,5-8,5.

9. Procédé selon l'une quelconque ou plusieurs des revendications 5-8, où les étapes A) et B) comme défini dans la revendication 5, effectuées séparément ou simultanément, et l'étape C) comme définie dans la revendication 6, effectuée séparément ou conjointement avec l'étape B), sont accomplies par l'un quelconque des procédés suivants : un procédé d'injection où lesdites solutions sont injectées dans la viande au moyen d'un injecteur ; un procédé de pulvérisation où lesdites solutions sont aspergées sur la viande ; un procédé d'immersion où la viande est immergée dans des bains contenant lesdites solutions ; un procédé d'application où ladite solution est appliquée à la viande au moyen d'une brosse ; ou un procédé de mélange et de malaxage où la viande est mélangée avec lesdites solutions et malaxées au moyen d'un agitateur.

10. Procédé selon l'une quelconque ou plusieurs des revendications 7-9, où les procédés de dissolution saline et de maturation gélifiante sont composés de l'un quelconque des procédés suivants : le procédé de massage, le procédé de vibration, le procédé ultrasonique et le procédé de mélange et de malaxage.
